# EUROPÄISCHE PATENTSCHRIFT

(11) **EP 1 970 609 B1**
(45) Veröffentlichungstag und Bekanntmachung des Hinweises auf die Patenterteilung: **04.11.2009**
(21) Anmeldenummer: 07405278.8
(22) Anmeldetag: 14.09.2007
(51) Int. Cl.: F16K 31/00, F16K 31/60

(54) **Ventilantrieb**
Valve actuator
Dispositif d'actionnement des soupapes

(30) Priorität: 20.09.2006 CH 14982006; 21.12.2006 CH 20822006
(43) Veröffentlichungstag der Anmeldung: 17.09.2008
(73) Patentinhaber: Fr. Sauter AG, 4016 Basel (CH)
(72) Erfinder: Kernen, Roland, 4127 Birsfelden (CH); Schadt, Stephan, 4051 Basel (CH); Köhler, Ivo, 4057 Basel (CH)
(74) Vertreter: Bohest AG

(56) Entgegenhaltungen:
- EP-A- 1 720 086
- WO-A-94/29778
- DE-A1- 3 529 614
- DE-A1- 10 065 098
- DE-A1- 19 909 096
- DE-C1- 10 119 589

## Beschreibung

### Technisches Gebiet

Die Erfindung betrifft einen Ventilantrieb gemäss dem Oberbegriff des unabhängigen Patentanspruchs 1.

Ventilantriebe mit einem Hubelement, einem Aktor, mittels dem das Hubelement in eine Hubrichtung bewegbar ist, einem mit einer Kraft entgegen der Hubrichtung auf das Hubelement wirkendem Druckelement, Vorspannmitteln zum Vorspannen des Hubelements entgegen der Kraft des Druckelements in eine Vorspannposition, einer Fixiereinrichtung, mit der das Hubelement in der Vorspannposition fixierbar ist, und Befestigungsmitteln, bei deren Betätigung der Ventilantrieb in einer befestigten Position betriebsfest am Ventil anordenbar ist, können zum Betätigen eines Ventils mit einer entlang seiner Längsachse bewegbaren Betätigungsspindel eingesetzt werden.

### Stand der Technik

In verschiedenen technischen Gebieten, wie beispielsweise in der Heizungs-, Klima- und Lüftungstechnik, werden Ventile und Verteiler für die Durchflussregelung eingesetzt. Im folgenden sind hier bei einer Erwähnung von Ventilen jeweils Verteiler ebenfalls mitumfasst. Solche Ventile weisen häufig eine aus einem Gehäuse ragende Betätigungsspindel auf, die in Richtung seiner Längsachse über eine bestimmte Strecke bewegbar ist. Die Betätigungsspindel ist dabei mit einem Verschlussorgan verbunden, wie beispielsweise einem neben einer Durchflussöffnung angeordneten Teller, der die Durchflussöffnung dicht abschliesst, wenn er an ihr anliegt. Weiter wirkt an der Betätigungsspindel eine Rückstellfeder, mit welcher die Betätigungsspindel in einer Normalstellung, in der keine Kraft von aussen auf die Betätigungsspindel wirkt, aus dem Gehäuse gedrückt wird. Typischerweise sind die Ventile so ausgestaltet, dass sie in dieser Normalstellung entweder geschlossen oder geöffnet sind. Zur Betätigung eines solches Ventils wird die Betätigungsspindel entgegen der Federkraft der Rückstellfeder in das Gehäuse gedrückt und damit das Verschlussorgan so bewegt, dass das Ventil geöffnet beziehungsweise geschlossen wird.

Zum automatisierten Betätigen solcher Ventile werden heute verschiedene Ausführungen von Ventilantrieben eingesetzt. Beispielsweise ist in der DE 197 48 973 A1 ein solcher Ventilantrieb beschrieben, der eine Druckfeder, einen Käfig, ein thermisches Dehnelement und einen mit dem thermischen Dehnelement verbundenen Heizwiderstand umfasst. Der Ventilantrieb ist so ausgestaltet, dass ein Kolben aus dem Dehnelement ausfährt, wenn der Heizwiderstand mit Strom beaufschlagt wird, und dass der Käfig dabei durch den Kolben in eine Hubrichtung bewegt wird. Die Druckfeder drückt den Käfig entgegen der Hubrichtung, so dass der Kolben die Federkraft der Druckfeder überwinden muss, um den Käfig zu bewegen. In montiertem Zustand liegt eine Auflagefläche des Ventilantriebs an einer Auflagefläche eines Gehäuses des Ventils an und der Käfig liegt am Längsende der Betätigungsspindel an. Die Federkraft der Druckfeder ist dabei grösser ausgelegt als die Federkraft der Rückstellfeder des Ventils, so dass der Käfig die Betätigungsspindel in das Gehäuse des Ventils drückt, wenn das Dehnelement nicht beheizt wird. Zur Betätigung des Ventils wird der Heizwiderstand mit Strom beaufschlagt, so dass er das Dehnelement erwärmt. Dadurch wird der Kolben des Dehnelements ausgefahren und der Käfig wird in Hubrichtung vom Ventil wegbewegt. Gleichzeitig wird die Betätigungsspindel durch die Federkraft der Rückstellfeder wieder aus dem Gehäuse gedrückt bis sich das Ventil in seiner Normalstellung befindet.

Ventile der oben beschriebenen Art werden heute in zahlreichen verschiedenen Ausführungen vertrieben. Für die Ausgestaltung entsprechender Ventilantriebe ist dabei unter anderem problematisch, dass die Schliessmasse der Ventile nicht normiert sind. Unter Schliessmass wird hier der Abstand zwischen dem aus dem Gehäuse ragenden Längsende der Betätigungsspindel und der Auflagefläche des Gehäuses, an der der Ventilantrieb in montiertem Zustand anliegt, verstanden. Wird ein Ventilantrieb verwendet, der nicht auf das Schliessmass des entsprechenden Ventils angepasst ist, kann mit dem Ventilantrieb beispielweise die Betätigungsspindel nicht über seine ganze Betätigungsstrecke bewegt werden und/oder der Ventilantrieb bewegt sich massgeblich in einem Bereich, in dem die Betätigungsspindel nicht bewegt wird (Leerhub). Um einen optimalen Betrieb des Ventils mittels eines Ventilantriebs gewährleisten zu können, werden die Ventilantriebe heute teilweise auf einzelne Ventiltypen angepasst, was einen erheblichen Aufwand bei der Produktion, beim Vertrieb und bei der Logistik von Ventilantrieben für verschiedene Ventile nach sich zieht.

Wie beispielsweise in der DE 299 05 078 U beschrieben, wird diesem Problem heute begegnet, indem Ventilantriebe jeweils ein Antriebsteil und ein Adapter umfassend ausgestaltet werden. Dabei sind die Antriebsteile universell und die Adapter jeweils einer spezifischen Ausgestaltung eines Ventils angepasst ausgestaltet, so dass ein einziges Antriebsteil über verschiedene Adapter auf verschiedene Typen von Ventilen montierbar ist und gleichzeitig ein optimaler Betrieb dieser verschiedenen Typen von Ventilen gewährleistet werden kann. Ein Nachteil solcher zweiteilig ausgestalteter Ventilantriebe ist, dass die Adapter auf einzelne Ventiltypen angepasst werden müssen, was einen Aufwand bei der Produktion, beim Vertrieb und bei der Logistik von Ventilantrieben für verschiedene Ventile nach sich zieht. Ausserdem kann es bei der Montage zu Verwechslungen der Adapter kommen, so dass nur ein ungenügender Betrieb des Ventils ermöglicht wird oder dass ein Betrieb des Ventils ganz verunmöglicht wird.

Weiter werden Ventilantriebe der oben genannten Art heute vorzugsweise vor der Montage auf ein Ventil vorgespannt. Das heisst die Druckfeder wird komprimiert und in diesem komprimierten Zustand so gehalten, dass der Ventilantrieb auf das Ventil aufgesetzt werden kann, ohne dass dessen Betätigungsspindel in das Gehäuse gedrückt wird. Dann wird der Ventilantrieb mit dem Ventil verriegelt und danach wird die Druckfeder wieder gelöst, so dass die Betätigungsspindel des Ventils in entgegen der Federkraft der Rückstellfeder in sein Gehäuse gedrückt wird und der Ventilantrieb betriebsbereit auf dem Ventil montiert ist. Dieses Vorspannen kann einerseits mittels externer Werkzeuge von aussen her vollzogen werden oder der Ventilantrieb kann selbst eigene Mittel zum Vorspannen aufweisen.

Beispielsweise ist in der EP 1 720 086 A2 ein Ventilantrieb beschrieben, der ein Hubelement aufweist, welches einerseits mit einem thermischen Aktor verbunden ist und andererseits wirkungsmässig mit der Betätigungsspindel eines Ventils verbindbar ist. Dieses Hubelement wird durch eine Druckfeder in Richtung der Betätigungsspindel gedrückt. Der Ventilantrieb weist an einem von aussen drehbaren Knopf schräge Flächen auf, die mit dem Hubelement so verbunden sind, dass bei einem manuellen Drehen des Knopfes das Hubelement in Hubrichtung entgegen der Federkraft der Druckfeder in eine vorgespannte Position verschoben wird. In dieser vorgespannten Position wird das Hubelement durch Rückhaltemittel gehalten. Bei der Montage wird der Ventilantrieb in dieser vorgespannten Position auf das Ventil aufgesetzt und dann mit dem Gehäuse des Ventils über spezielle Befestigungsmittel verriegelt. Danach wird der Ventilantrieb aus der vorgespannten Position in eine Betriebsposition gelöst, indem der thermische Aktuator aktiviert wird und dadurch die Rückhaltemittel gelöst werden. Probleme solcher Ventilantriebe, die vor der Montage auf die beschriebene Art vorgespannt werden, können darin bestehen, dass teilweise externe Werkzeuge benötigt werden, die wiederum genau auf den Typ von Ventilantrieb angepasst sein müssen, und dass bei der Montage verhältnismässig einfach Fehler möglich sind, die einerseits den Monteur gefährden und andererseits den Ventilantrieb und das Ventil selbst beschädigen können. Beispielsweise kann der Ventilantrieb nach dem Aufsetzen auf das Ventil zu früh aus seiner vorgespannten Position gelöst werden, so dass er durch die Federkraft der Druckfeder vom Ventil abspringt. Ausserdem ist insbesondere bei Ventilantrieben, die durch den thermischen Aktor aus der vorgespannten Position gelöst werden, die Vorspannstrecke der Druckfeder beschränkt unter den maximalen Arbeitshub des Aktors, was die Montage und die Ausgestaltung des Ventilantrieb erschweren kann.

Aufgabe der nachfolgenden Erfindung ist es daher, einen Ventilantrieb vorzuschlagen, der einfach und sicher auf verschiedenen Typen von Ventilen montierbar ist.

### Darstellung der Erfindung

Die Aufgabe wird erfindungsgemäss durch einen Ventilantrieb gelöst, wie er im unabhängigen Patentanspruch 1 definiert ist. Vorteilhafte Ausführungsvarianten des erfindungsgemässen Ventilantriebs ergeben sich aus den abhängigen Patentansprüchen.

Das Wesen der Erfindung besteht im Folgenden: Ein Ventilantrieb zum Betätigen eines Ventils mit einer entlang seiner Längsachse bewegbaren Betätigungsspindel, umfasst ein mit der Betätigungsspindel wirkungsmässig verbindbares Hubelement, einen Aktor, mittels dem das Hubelement in eine Hubrichtung bewegbar ist, ein mit einer Kraft entgegen der Hubrichtung auf das Hubelement wirkendes Druckelement, Vorspannmittel zum Vorspannen des Hubelements entgegen der Kraft des Druckelements in eine Vorspannposition, eine Fixiereinrichtung, mit der das Hubelement in der Vorspannposition fixierbar ist, und Befestigungsmittel, bei deren Betätigung der Ventilantrieb in einer befestigten Position betriebsfest am Ventil anordenbar ist. Der Ventilantrieb umfasst weiter Auslösemittel, mit denen simultan die Fixiereinrichtung lösbar ist und die Befestigungsmittel betätigbar sind, so dass simultan der Ventilantrieb in die befestigte Position stellbar ist und das Hubelement aus der Vorspannposition lösbar ist. Der Begriff "simultan" wird hier im Sinne von "in einer Aktion ablaufend" verwendet, was jeweils nicht zwingend gleichzeitig sein muss sondern auch zeitlich versetzt sein kann, insbesondere in einer vordefinierten zeitlichen Abfolge. Weiter sind hier bei einer Erwähnung von Ventilen jeweils Verteiler ebenfalls mitumfasst. Ein Ventilantrieb mit solchen Auslösemitteln ermöglicht es, dass bei der Montage des Ventilantriebs auf das Ventil erst der Ventilantrieb mit vorgespanntem Hubelement auf den Ventilkörper des Ventils aufgesetzt wird und danach die Auslösemittel betätigt werden. Die Auslösemittel sowie auch die Vorspannmittel können beispielsweise manuell betätigbar sein. Bei Betätigung der Auslösemittel kann dann der Ventilantrieb erst über die Befestigungsmittel zumindest in Hubrichtung ortsfest mit dem Ventil verbunden werden und darauf die Fixiereinrichtung gelöst werden, so dass der Ventilantrieb fest am Ventil angeordnet ist, wenn das Druckelement aus seiner vorgespannten Position gelöst wird und über das Hubelement die Betätigungsspindel in den Ventilkörper drückt. Der Ventilantrieb kann so über die Auslösemittel kontrolliert in eine Betriebsstellung gestellt werden, in der er auf dem Ventil montiert ist und das Druckelement das Hubelement auf die Ventilspindel wirkt. Auf diese Weise kann gewährleistet werden, dass der Ventilantrieb auf einfache Weise korrekt montiert wird, ohne dass die Sicherheit eines Monteurs oder der Betrieb des Ventilantriebs gefährdet sind.

Vorzugsweise sind die Vorspannmittel, die Fixiereinrichtung und die Auslösemittel dabei so ausgestaltet, dass mit den Auslösemitteln simultan über eine Betätigung der Befestigungsmittel der Ventilantrieb aus der befestigten Position lösbar ist, das Hubelement über die Vorspannmittel in die Vorspannposition stellbar ist und das Hubelement über die Fixiereinrichtung in der Vorspannposition fixierbar ist. Eine solche Ausgestaltung des Ventilantriebs ermöglicht es, dass der Ventilantrieb über die Auslösemittel sowohl von der vorgespannten Stellung in die Betriebsstellung stellbar ist, als auch von der Betriebsstellung zurück in die vorgespannte Stellung. Somit kann der Ventilantrieb auf einfache sichere Weise sowohl auf dem Ventil montiert werden als auch vom Ventil demontiert, so dass er auch einfach auf verschiedenen Ventilen eingesetzt werden kann. Auch sind auf diese Weise zum Vorspannen keine zusätzlichen externen Werkzeuge notwendig und das Vorspannen kann im Wesentlichen beliebig wiederholt werden.

In einer bevorzugten Ausführungsvariante umfasst das Hubelement des Ventilantriebs ein mit der Betätigungsspindel wirkungsmässig verbindbares Ausgleichsteil und ein mit dem Aktor wirkungsmässig verbindbares Hubteil, wobei das Ausgleichsteil und das Hubteil über Verriegelungsmittel an in Hubrichtung verschiedenen Positionen zueinander miteinander verriegelbar und voneinander entriegelbar sind und wobei mit den Auslösemittel simultan die Befestigungsmittel betätigbar sind, die Fixiereinrichtung lösbar ist und das Ausgleichsteil mit dem Hubteil verriegelbar ist, so dass simultan der Ventilantrieb in die befestigte Position stellbar ist, das Hubelement aus der Vorspannposition lösbar ist und das Hubteil mit dem Ausgleichsteil in einer einem Schliessmass des Ventils angepassten Position zueinander verriegelbar sind. Das Ausgleichssteil eines solchen Ventilantriebs kann im Betrieb an einer bevorzugten Position im Verhältnis zum Hubteil mit dem Hubteil verriegelt sein. Somit kann insbesondere bei der Montage des Ventilantriebs auf das Ventil der Ventilantrieb exakt auf das Schliessmass des Ventils angepasst werden, so dass ein einwandfreier Betrieb des Ventils gewährleistet werden kann. Wird der Ventilantrieb auf einem anderen Typ von Ventil mit einem anderen Schliessmass montiert, kann das Ausgleichsteil an einer anderen Position im Verhältnis zum Hubteil mit dem Hubteil verriegelt werden, so dass auch ein einwandfreier Betrieb des anderen Typs von Ventil gewährleistet werden kann. Beispielsweise ist das Ausgleichssteil im Betrieb des Ventilantriebs auf einem Ventil mit einem verhältnismässig grossen Schliessmass vorzugsweise in Bezug auf das Hubteil verhältnismässig weit in Hubrichtung verschoben mit dem Hubteil verriegelt. Demgegenüber ist beispielsweise das Ausgleichssteil im Betrieb des Ventilantriebs auf einem Ventil mit einem verhältnismässig kleinen Schliessmass vorzugsweise in Bezug auf das Hubteil verhältnismässig weit entgegen der Hubrichtung verschoben mit dem Hubteil verriegelt. Die Anpassung eines solchen Ventilantriebs auf ein bestimmtes Schliessmass eines Typs von Ventil kann wiederholt werden, so dass ein einziger Ventilantrieb auf mehreren Ventilen verschiedenen Typs eingesetzt werden kann. Bei der Montage des Ventilantriebs können keine schliessmassspezifischen Fehler gemacht werden, so dass die Montage des Ventilantriebs verhältnismässig sicher ist. Ausserdem kann durch die simultane Auslösung der automatischen Einstellung des Ventilantriebs auf das Schliessmass des Ventils gewährleistet werden, dass diese Einstellung nicht unterbleibt und somit, dass das Ventil optimiert betreibbar ist. Beispielsweise kann insbesondere während der Montage des Ventilantriebs auf das Ventil bei Betätigung der Auslösemittel der Ventilantrieb erst über die Befestigungsmittel zumindest in Hubrichtung ortsfest mit dem Ventil verbunden werden, darauf die Fixiereinrichtung gelöst werden und somit die Betätigungsspindel mittels des Druckelements über das Ausgleichsteil in das Ventilgehäuse gedrückt werden und anschliessend das Schliessmass des Ventils über eine Verriegelung des Hubteils mit dem Ausgleichsteil in dieser Position ausgeglichen werden. Somit ist der Ventilantrieb fest am Ventil angeordnet, wenn das Druckelement aus seiner vorgespannten Position gelöst wird und die Betätigungsspindel in den Ventilkörper drückt.

Das Hubteil kann dabei das Ausgleichsteil mindestens teilweise umschliessen, so dass das Ausgleichsteil im Hubteil bewegbar ist, wenn das Ausgleichsteil und das Hubteil voneinander entriegelt sind. Mit einem so ausgestalten Hubelement können die Verriegelungsmittel auf einfache Weise ausgestaltet sein und eine kompakte Konstruktion des Ventilantriebs wird ermöglicht.

Die Verriegelungsmittel können dabei an einer Aussenseite des Ausgleichsteils angeordnete Aussenzähne umfassen und an einer Innenseite des Hubteils angeordnete Innenzähne, wobei die Aussenzähne und die Innenzähne ineinander greifen, wenn das Ausgleichsteil und das Hubteil miteinander verriegelt sind. Mittels so ineinander greifenden Aussenzähne und Innenzähne kann auf einfache Weise eine effektive Verriegelung ausgestaltet werden, die eine Verriegelung des Ausgleichsteils und des Hubteils an in Hubrichtung verschiedenen Positionen zueinander ermöglicht.

Dabei kann die Aussenseite des Ausgleichsteils in Umfangrichtung alternierend zueinander angeordnete Bereiche mit den Aussenzähnen und Bereiche ohne die Aussenzähne aufweisen und die Innenseite des Hubteils in Umfangrichtung alternierend zueinander angeordnete Bereiche mit den Innenzähnen und Bereiche ohne die Innenzähne. Das Hubteil und das Ausgleichsteil sind dann über die Auslösemittel von einer entriegelten Stellung, in der die Aussenzähne benachbart zu den Bereichen ohne die Innenzähne und die Innenzähne benachbart zu den Bereichen ohne die Aussenzähne liegen, zu einer verriegelten Stellung, in der die Aussenzähne und die Innenzähne ineinander greifen, zueinander bewegbar. Auf diese Weise kann die Verriegelung einfach und effektiv ausgestaltet werden, indem beispielsweise das Hubteil im Verhältnis zum Ausgleichsteil mittels der Auslösemittel von der verriegelten Stellung in die entriegelte Stellung und umgekehrt verdreht werden kann. Dabei können das Ausgleichsteil und das Hubteil im Wesentlichen zylinderförmig ausgestalten sein, was ein einfaches Verdrehen zueinander ermöglicht.

In einer Ausführungsvariante des Ventilantriebs kann das Druckelement wirkungsmässig mit dem Ausgleichsteil verbunden sein. So wirkt das Druckelement auf das Ausgleichsteil und ein weiteres Druckelement ist wirkungsmässig mit dem Hubteil verbunden, wobei das weitere Druckelement so angeordnet ist, dass eine Kraft entgegen der Hubrichtung auf das Hubteil wirkt. Mit einem solchen weiteren Druckelement kann gewährleistet werden, dass das Hubteil immer maximal weit entgegen der Hubrichtung bewegt ist, wenn das Ausgleichsteil und das Hubteil voneinander entriegelt sind. Dabei kann das weitere Druckelement insbesondere so ausgestaltet sein, dass seine Druckkraft, die auf das Hubteil wirkt, nicht ausreicht um die Betätigungsspindel in das Ventil zu drücken. Beim Betätigen der Auslösemittel des Ventilantriebs kann somit gewährleistet werden, dass das Hubteil maximal entgegen der Hubrichtung bewegt ist und das Ausgleichsteil die Betätigungsspindel in den Ventilkörper drückt, bevor das Hubteil und das Ausgleichsteil zueinander verriegelt werden. Bei dieser Ausführungsvariante kann das Ausgleichsteil auf der der Betätigungsspindel des Ventils zugewandten Seite des Aktors angeordnet sein, womit der Ventilantrieb sehr kompakt ausgestaltet sein kann.

Der Ventilantrieb kann ein Gehäuse mit einer Öffnung oder einem Fenster aufweisen, mittels derer bzw. mittels dessen die Stellung des Hubelements von ausserhalb des Gehäuses sichtbar ist. Dies ermöglicht einem Benutzer des Ventilantriebs dessen Betriebszustand einfach zu erkennen. Das Gehäuse kann dabei mittels Zweikompönentenspritzverfahren aus einem transparenten Kunststoff und einem untransparenten Kunststoff hergestellt sein, wobei das Fenster durch den transparenten Kunststoff gebildet ist. Dies ermöglicht eine einfache und effiziente Herstellung des Gehäuses mit einem Fenster, wobei die Stellung des Hubelements von ausserhalb des Gehäuses durch das Fenster ersichtlich ist.

Mit Vorteil sind die Vorspannmittel, die Fixiereinrichtung und die Auslösemittel so ausgestaltet, dass mit den Auslösemitteln simultan über eine Betätigung der Befestigungsmittel der Ventilantrieb aus der befestigten Position lösbar ist, das Ausgleichsteil vom Hubteil entriegelbar ist, das Hubelement über die Vorspannmittel in die Vorspannposition stellbar ist und das Hubelement über die Fixiereinrichtung in der Vorspannposition fixierbar ist. Eine solche Ausgestaltung des Ventilantriebs ermöglicht es, dass der Ventilantrieb über die Auslösemittel sowohl von der vorgespannten Stellung in die Betriebsstellung stellbar ist, als auch von der Betriebsstellung zurück in die vorgespannte Stellung, wobei der Ventilantrieb jeweils beim Stellen in die Betriebsstellung auf das Schliessmass des Ventils eingestellt wird und wobei jeweils beim Vorspannen des Hubelements diese Einstellung wieder aufgehoben wird.
Somit kann der Ventilantrieb auf einfache sichere Weise sowohl auf dem Ventil montiert werden als auch vom Ventil demontiert werden, so dass er einfach auf verschiedenen Ventilen eingesetzt werden kann. Auch sind auf diese Weise zum Vorspannen keine zusätzlichen externen Werkzeuge notwendig und das Vorspannen kann im Wesentlichen beliebig wiederholt werden.

Vorzugsweise ist das Hubelement zum Vorspannen um eine Vorspannstrecke, die grösser ist als ein maximaler Arbeitshub des Aktors, entgegen der Kraft des Druckelements in die Vorspannposition vorspannbar. Der maximale Ventilhub eines Ventils, das mit dem Ventilantrieb noch betreibbar ist, hängt unter anderem davon ab, wie gross der Arbeitshub des Aktors ist. Unter Ventilhub wird hier die Strecke verstanden, über die die Ventilspindel eines Ventils axial bewegbar ist. Ist der maximale Arbeitshub des Aktors kleiner als der Ventilhub des Ventils, auf dem der Ventilantrieb montiert ist, so vermag der Ventilantrieb das Ventil nicht vollständig und optimal zu betreiben. Deshalb kann mit einem um mehr als der Arbeitshub des Aktors vorspannbaren Ventilantrieb gewährleistet werden, dass ein maximal möglicher Ventilhub durch den Ventilantrieb sauber betrieben werden kann und dass ein möglichst grosser Bereich an Schliessmassen mit dem Ventilantrieb ausgeglichen werden kann.

Mit Vorteil umfasst der Ventilantrieb ein um das Hubelement drehbares Drehelement. Die Vorspannmittel weisen dabei mindestens ein radial vom Hubelement abstehendes, fest am Hubelement angeordnetes Drehglied und mindestens eine wirkungsmässig mit dem mindestens einen Drehglied verbindbare, am Drehelement fest angeordnete Rampe auf, so dass das Hubelement über ein Verschieben des Drehglieds entlang der Rampe mittels Drehen des Drehelements vorspannbar ist.
Ein solches Drehelement zusammen mit der erwähnten Ausgestaltung des Hubelements ermöglicht eine einfach und sicher zu betreibende Ausführung von in den Ventilantrieb integrierten Mitteln zum Vorspannen des Hubelements. Es sind dazu keine zusätzlichen externen Werkzeuge notwendig und das Vorspannen kann im Wesentlichen beliebig wiederholt werden.

Die Fixiereinrichtung kann dabei mindestens eine in die mindestens eine Rampe übergehende Terrasse aufweisen, so dass das mindestens eine Drehglied auf der mindestens einen Terrasse anordenbar ist, wenn das Hubelement mittels Drehen des Drehelements vorgespannt ist. Eine solche Terrasse vermag das Hubelement über das Drehglied in seiner vorgespannten Position zu halten, wobei das Druckelement das Hubelement über das Drehglied dabei auf die Terrasse drückt und somit fixiert. Zum Lösen des Hubelements aus der vorgespannten Position kann das Drehelement beispielsweise manuell gedreht werden bis das Drehglied auf der Rampe liegt. Danach kann das Hubelement durch das Druckelement weiter entgegen der Hubrichtung gedrückt werden und gleichzeitig kann das Drehelement weiter gedreht werden.

Die Fixiereinrichtung weist mit Vorteil eine Sicherung auf, die so ausgestaltet ist, dass das mindestens eine Drehglied mittels der Sicherung sicherbar ist, wenn das Hubelement vorgespannt ist. Falls die mindestens eine Rampe wie oben beschrieben in mindestens eine Terrasse übergeht, kann die Sicherung beispielsweise zwischen der mindestens einen Rampe und der mindestens einen Terrasse angeordnet sein. Die Sicherung kann weiter beispielsweise als Kuppe, die die mindestens eine Terrasse in Hubrichtung überragt, als Delle, die die mindestens eine Terrasse entgegen der Hubrichtung unterläuft oder als einschiebbarer Stift ausgestaltet sein. Zum Lösen des Hubelements aus der vorgespannten Position muss erst die Sicherung gelöst werden, beispielsweise indem das Drehglied mittels Drehen des Drehelements erst über die Kuppe geschoben wird bevor es auf der Rampe liegt und durch die Druckfeder entgegen der Hubrichtung bewegt werden kann. Mit einer solchen Sicherung kann gewährleistet werden, dass das Hubelement nicht unbeabsichtigt, beispielsweise über Vibrationen des Ventilantriebs, aus der vorgespannten Position gelöst wird.

Vorzugsweise umfassen die Befestigungsmittel eine mit dem Ventil fest verbindbare, mindestens ein erstes Formschlusselement aufweisende Mutter, um die ein unterer Teil des Drehelements drehbar ist, und mindestens ein am unteren Teils des Drehelements angeordnetes, komplementär zum ersten Formschlusselement ausgestaltetes, zweites Formschlusselement, wobei die Mutter und das Drehelement so ausgestaltet sind, dass der Ventilantrieb mittels Drehen des Drehelements über ein Verbinden des mindesten einen ersten Formschlusselements mit dem mindesten einen zweiten Formschlusselement in Hubrichtung ortsfest an der Mutter befestigbar ist, wenn das Drehelement auf die Mutter aufgesetzt ist. Das mindestens eine erste Formschlusselement kann dabei beispielsweise am Umfang der Mutter angeordnet sein und das mindestens eine zweite Formschlusselement an der Innenseite des unteren Teils des Drehelements. Mit so ausgestalteten Befestigungsmitteln kann zur Montage des Ventilantriebs auf dem Ventil die Mutter fest am Ventilgehäuse befestigt werden. Typischerweise weisen Ventile an ihren Ventilkörpern ausgestaltete normierte Aussengewinde auf, so dass die Mutter vorzugsweise ein entsprechendes komplementäres Innengewinde umfasst und zum Befestigen auf den Ventilkörper aufgeschraubt wird. Nach diesem Befestigen der Mutter kann der Ventilantrieb so auf die Mutter aufgesetzt werden, dass der untere Teil des Drehelements die Mutter umschliesst. Mittels eines Drehens des Drehelements kann dann das mindestens eine erstes Formschlusselement in das mindestens eine zweite Formschlusselement greifen, so dass der Ventilantrieb sofort in Hubrichtung ortsfest mit dem Ventil verriegelt ist. Insbesondere wenn das Drehelement zusätzlich wie oben beschrieben eine Rampe und eine Terrasse aufweist sowie das Hubelement ein Drehglied, kann mittels einer einzigen Drehbewegung des Drehelements zuerst der Ventilantrieb in Hubrichtung fest auf dem Ventil befestigt werden und dann das Hubelement wie oben beschrieben aus seiner vorgespannten Position gelöst werden. Idealerweise ist der Ventilantrieb in Hubrichtung fest auf dem Ventil verriegelt noch bevor das Drehelement soweit gedreht ist, dass das Drehglied auf der Rampe angeordnet ist.

Mit Vorteil ist das Hubteil drehfest mit der Mutter verbindbar, wenn das Drehelement auf die Mutter aufgesetzt ist, und das Ausgleichsteil und das Hubteil sind mittels Verdrehen zueinander miteinander verriegelbar und voneinander entriegelbar. So kann bei aufgesetztem Ventilantrieb durch Drehen des Drehelements das Ausgleichen des Schliessmasses des Ventils ausgelöst werden und das Hubteil dabei mit dem Ausgleichsteil verriegelt werden, Insbesondere wenn das Drehelement und das Hubelement wie vorgehend beschrieben ausgestaltet sind, kann mittels einer einzigen Drehbewegung des Drehelements der Ventilantrieb in Hubrichtung fest auf dem Ventil befestigt werden, das Hubelement wie oben beschrieben aus seiner vorgespannten Position gelöst werden und das Schliessmass des Ventils ausgeglichen werden. Mit einem solchen Ventilantrieb kann sicher gestellt werden, dass sowohl das Hubelement aus der vorgespannten Position gelöst wird, als auch der Ventilantrieb auf dem Ventil verriegelt wird und das Schliessmass des Ventils ausgeglichen wird. Ausserdem kann gewährleistet werden, dass alle diese Funktionen in der korrekten Reihenfolge ablaufen, so dass die Möglichkeit von Montagefehlern minimiert werden kann.

Vorzugsweise ist das mindestens eine Drehglied fest am Ausgleichsteil angeordnet, das Drehelement weist einen Anschlag auf und mindestens eine Drehsicherung ist angeordnet, wobei das mindestens eine Drehglied von der Drehsicherung gehalten ist, wenn sich das Hubelement in der vorgespannten Position befindet, und wobei das Ausgleichsteil mittels des Anschlags des Drehelements über das Drehglied zum Hubteil verdreht ist, wenn das Drehelement gedreht ist, so dass das Ausgleichsteil mit dem Hubteil verriegelt ist. Über eine solche Drehsicherung kann das Drehglied bei einem Drehen des Drehelements solange gehalten werden, bis es auf der Rampe liegt und beispielsweise durch das Druckelement aus der Drehsicherung gedrückt wird. So kann gewährleistet werden, dass das Ausgleichsteil nicht mit dem Hubteil verriegelt wird, bevor das Schliessmass des Ventils durch den Ventilantrieb ausgeglichen ist. Die Drehsicherung kann beispielsweise als mindestens eine in Hubrichtung am Hubelement ausgebildete Aussparung zur Aufnahme des Drehglieds ausgestaltet sein, wobei das Drehglied in der Aussparung angeordnet ist, wenn sich das Hubelement in der vorgespannten Position befindet. Mittels des Anschlags kann weiter das Ausgleichsteil über das Drehglied durch Drehen des Drehelements zum Hubteil verdreht werden, so dass eine vollständige Verriegelung von Hubteil und Ausgleichsteil sicher gestellt werden kann.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung.
Es zeigen:

Fig. 1 eine perspektivische Ansicht eines ersten Ausführungsbeispiels eines erfindungsgemässen Ventilantriebs in einer vorgespannten Stellung,

Fig. 2 einen Querschnitt durch den Ventilantrieb von Fig. 1,

Fig. 3 eine perspektivische Explosionsansicht einiger für die Auslösung des Ventilantriebs wesentlicher Teile des Ventilantriebs von Fig. 1,

Fig. 4 eine perspektivische Ansicht der Teile von Fig. 3 in einem zusammengebauten Zustand und in einer vorgespannten Stellung,

Fig. 5 einen Querschnitt durch die Teile von Fig. 4,

Fig. 6 einen Querschnitt durch die Teile von Fig. 4 während der Auslösung des Ventilantriebs aus der vorgespannten Stellung,

Fig. 7 einen Querschnitt durch die Teile von Fig. 4 in einer ausgelösten betriebsbereiten Stellung,

Fig. 8 eine perspektivische Ansicht eines zweiten Ausführungsbeispiels eines Ventilantriebs in einer Ausgangsstellung,

Fig. 9 einen Querschnitt durch den Ventilantrieb von Fig. 8,

Fig. 10 eine perspektivische Explosionsansicht einiger für den Schliessmassausgleich wesentlicher Teile des Ventilantriebs von Fig. 8,

Fig. 11 eine perspektivische Ansicht des Ventilantriebs von Fig. 8 in einer vorgespannten Stellung,

Fig. 12 einen Querschnitt durch den Ventilantrieb von Fig. 11 mit einem Anschlussteil eines Ventils,

Fig. 13 eine perspektivische Ansicht des Ventilantriebs von Fig. 8 in einer unverriegelten aufgesetzten Stellung,

Fig. 14 einen Querschnitt durch den Ventilantrieb von Fig. 13 mit dem Anschlussteil des Ventils,

Fig. 15 eine perspektivische Ansicht des Ventilantriebs von Fig. 8 in einer verriegelten aufgesetzten Stellung,

Fig. 16 einen Querschnitt durch den Ventilantrieb von Fig. 15 mit dem Anschlussteil des Ventils,

Fig. 17 eine perspektivische Ansicht des Ventilantriebs von Fig. 8 in einer Betriebsstellung mit aktiviertem thermischen Antrieb,

Fig. 18 einen Querschnitt durch den Ventilantrieb von Fig. 17,

Fig. 19 eine perspektivische Ansicht des Ventilantriebs von Fig. 8 in einer Betriebsstellung mit unaktiviertem thermischen Antrieb,

Fig. 20 einen Querschnitt durch den Ventilantrieb von Fig. 19,

Fig. 21 eine perspektivische Ansicht eines dritten Ausführungsbeispiels eines erfindungsgemässen Ventilantriebs in einer Ausgangsstellung,

Fig. 22 eine seitliche Ansicht des Ventilantriebs von Fig. 21 ohne Kulisse und ohne Drehfeder,

Fig. 23 eine perspektivische Explosionsansicht einiger für den Schliessmassausgleich wesentlicher Teile des Ventilantriebs von Fig. 21,

Fig. 24. einen Querschnitt durch den Ventilantrieb von Fig. 21,

Fig. 25 eine perspektivische Ansicht des Ventilantriebs von Fig. 21 in einer vorgespannten Stellung,

Fig. 26 eine seitliche Ansicht des Ventilantriebs von Fig. 25 ohne Kulisse und ohne Drehfeder,

Fig. 27 einen Querschnitt durch den Ventilantrieb von Fig. 25,

Fig. 28 eine perspektivische Ansicht des Ventilantriebs von Fig. 21 in einer Auslösstellung,

Fig. 29 eine seitliche Ansicht des Ventilantriebs von Fig. 28 ohne Kulisse und ohne Drehfeder,

Fig. 30 einen Querschnitt durch den Ventilantrieb von Fig. 29,

Fig. 31 eine perspektivische Ansicht des Ventilantriebs von Fig. 21 in einer Kompensationsstellung,

Fig. 32 eine seitliche Ansicht des Ventilantriebs von Fig. 31 ohne Kulisse und ohne Drehfeder,

Fig. 33 einen Querschnitt durch den Ventilantrieb von Fig. 31,

Fig. 34 eine perspektivische Ansicht des Ventilantriebs von Fig. 21 in einer Betriebsstellung,

Fig. 35 eine seitliche Ansicht des Ventilantriebs von Fig. 34 ohne Kulisse und ohne Drehfeder, und

Fig. 36 einen Querschnitt durch den Ventilantrieb von Fig. 34. Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach aussen" bezeichnen Richtungen hin zum oder weg vom geometrischen Mittelpunkt des Ventilantriebs sowie benannter Teile desselben. Weiter bezeichnen die Ausdrücke "Uhrzeigersinn" und "Gegenuhrzeigersinn" Drehrichtungen in Bezug auf den Ventilantriebs sowie benannter Teile desselben. Die Terminologie umfasst die oben ausdrücklich erwähnten Wörter, Ableitungen von denselben und Wörter ähnlicher Bedeutung.

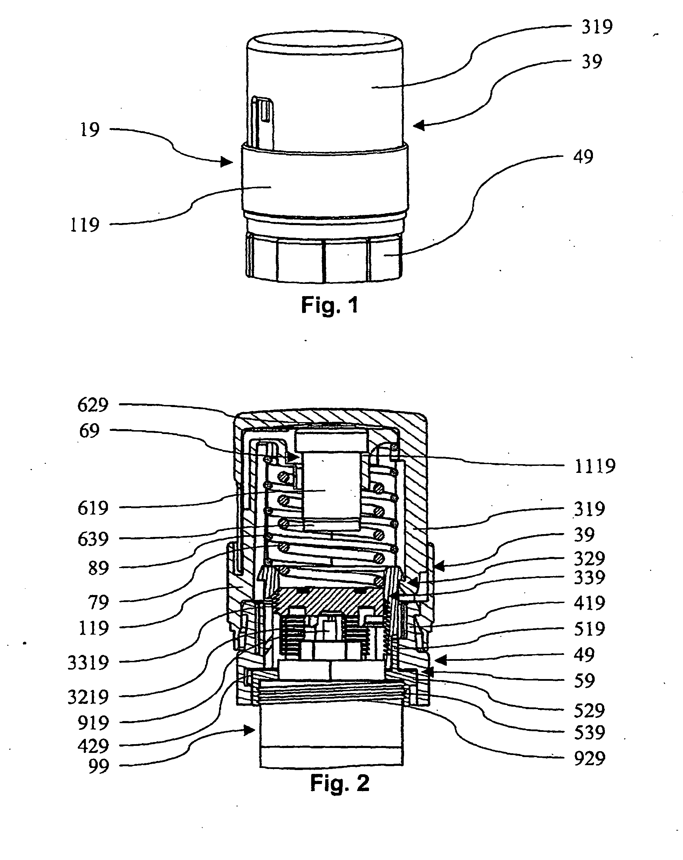

Fig. 1 zeigt eine perspektivische Ansicht eines ersten Ausführungsbeispiels eines erfindungsgemässen Ventilantriebs, der ein Gehäuse 19 mit einem Gehäusekörper 119 umfasst, welcher im Wesentlichen zylindrisch ausgestaltet ist. Der Ventilantrieb umfasst weiter ein Hubelement 39 mit einer Hubkappe 319, die auf ihrer linken Seite eine Öffnung aufweist, über welche beispielsweise Stromkabel ins Innere des Ventilantriebs gelegt sein können. Das Hubelement 39 erstreckt sich axial in den Gehäusekörper hinein. Nach unten schliesst ein Bajonettring 49 als Drehelement an das Gehäuse 19 an, der um die Längsachse des Ventilantriebs herum drehbar ist.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen.

In Fig. 2 ist der Ventilantrieb von Fig. 1 in einer vorgespannten Stellung im Querschnitt gezeigt. Darin ist ersichtlich, dass die Hubkappe 319 im Wesentlichen hohlzylindrisch ausgestaltet ist und nach unten hin über einen Schnappverschluss mit einer einen zylindrischen Innenraum bildenden Ausgleichshülse 329 verbunden ist. Im Innenraum der Ausgleichshülse 329 ist ein Ausgleichsstift 339 als Ausgleichsteil angeordnet ist. Die Ausgleichshülse 329 weist auf seiner Innenseite Bereiche mit sich in den Innenraum der Ausgleichshülse 329 erstreckenden Innenzähne 3219 auf und der Ausgleichsstift 339 an seinem Umfang Bereiche mit sich nach aussen erstreckenden Aussenzähnen 3319.

Der Gehäusekörper 119 des Gehäuses 19 erstreckt sich in den innenraum der Hubkappe 319 hinein, wobei er darin einen nach oben geöffneten Behälter 1119 bildet, in dem ein thermischer Antrieb 69 als Aktor angeordnet ist. Der thermischer Antrieb 69 weist ein ein Dehnelement umschliessendes Gehäuse 619 auf, das auf seiner unteren Seite mit einer Widerstandsheizung 639 verbunden ist und an dessen oberen Seite ein Kolben 629 herausragt. Das äussere obere Längsende des Kolbens 629 liegt an der Hubkappe 319 an. Zwischen dem Gehäusekörper 119 und dem Ausgleichsstift 339 ist eine Betätigungsfeder 79 als Druckelement eingespannt, die den Ausgleichsstift 339 vom thermischen Antrieb 69 nach unten wegdrückt. Zwischen dem Gehäusekörper 119 und der Ausgleichshülse 329 ist eine Ausgleichsfeder 89 als weiteres Druckelement eingespannt, die die Ausgleichshülse 329 ebenfalls vom thermischen Antrieb 69 nach unten wegdrückt.

Im unteren Bereich der Fig. 2 ist ein Ventil 99 dargestellt, das eine Betätigungsspindel 919 und ein um einen Ventilkörper herum angeordnetes Aussengewinde 929 aufweist. Auf das Aussengewinde 929 ist eine ein Innengewinde 539 aufweisende Bajonettmutter 59 aufgeschraubt, an deren Umfang L-förmige Vorsprünge 529 als erste Formschlusselemente ausgestaltet sind. In der vorgespannten Stellung des Ventilantriebs liegt der Ausgleichstift 339 nicht auf der Betätigungsspindel 919 auf, so dass die Betätigungsfeder 79 nicht auf die Betätigungsspindel 919 wirkt. Entsprechend ist die Betätigungsspindel 919 durch die Rückstellfeder des Ventils maximal aus dem Ventilgehäuse herausgedrückt.

Der Bajonettring 49 ist nach oben hin über Schnappelemente 419 drehbar mit dem Gehäusekörper 119 verbunden und weist nach unten hin an seiner Innenseite korrespondierend zu den L-förmige Vorsprüngen 529 der Bajonettmutter 59 ausgestaltete L-förmige Aufnahmen 429 als zweite Formschlusselemente auf. In der in der Fig. 2 gezeigten vorgespannten Stellung des Ventilantriebs ist der Ventilantrieb auf das Ventil lose aufgesetzt, indem der Bajonettring 49 auf der Bajonettmutter 59 angeordnet ist, so dass der Bajonettring 49 die Bajonettmutter 59 umschliesst. Dabei sind Schwerter 519 der Bajonettmutter 59 in entsprechenden Schwertaufnahmen der Ausgleichshülse 329 angeordnet, so dass die Ausgleichshülse drehfest mit der Bajonettmutter verbunden ist. Die L-förmigen Vorsprünge 529 der Bajonettmutter 59 greifen dabei nicht in die L-förmigen Aufnahmen 429 des Bajonettrings 49.

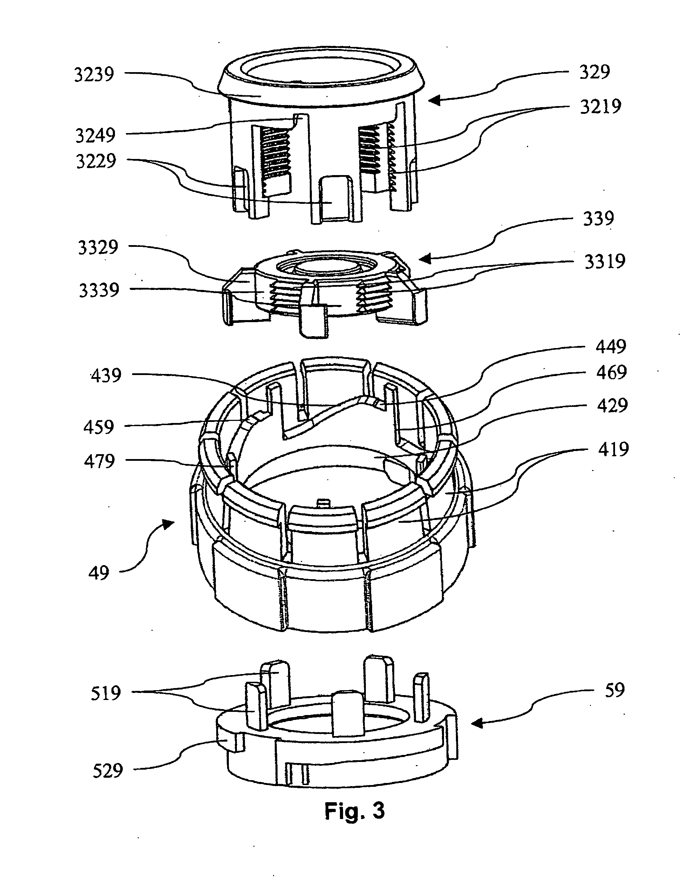

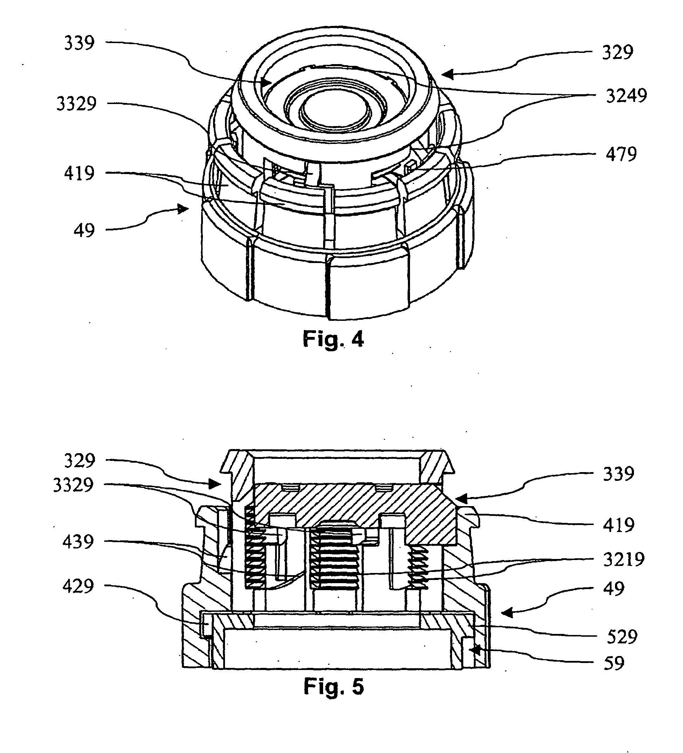

Fig. 3 zeigt einige für die Auslösung des Ventilantriebs relevanten Teile des Ventilantriebs von Fig. 1 in einer detaillierten perspektivischen Explosionsansicht, wobei die Perspektive bei jedem der Teile so angepasst ist, dass die wesentlichen Elemente des jeweiligen Teils ersichtlich sind, und Fig. 4 beziehungsweise Fig. 5 zeigen die gleichen Teile zusammengesetzt in einer perspektivischen Ansicht beziehungsweise in einer Schnittansicht in der vorgespannten Stellung des Ventilantriebs.

Die Ausgleichshülse 329 bildet mittels fünf vertikaler, voneinander beabstandeter Zylindersegmente, die über einen einen Vorsprung 3239 aufweisenden Ring miteinander verbunden sind, einen zylinderförmigen Innenraum. Wie in Fig. 2 ersichtlich, greift der Vorsprung 3239 in zusammengebautem vorgespanntem Zustand des Ventilantriebs hinter einen entsprechenden Vorsprung der Hubkappe 319, so dass die Ausgleichshülse 329 und die Hubkappe 319 als Hubteil miteinander verbunden sind. An den linken Rand jedes Zylindersegments schliesst jeweils eine sich in Richtung des Rings nach oben erstreckende Aussparung 3249 an. Die Zylindersegmente weisen an ihren Innenseiten die Innenzähne 3219 auf und im unteren Bereich ihrer Aussenseiten die nach unten geöffneten Schwertaufnahmen 3229. Die Schwertaufnahmen 3229 sind entsprechend den Schwertern 519 der Bajonettmutter 59 ausgestaltet.

Der im Wesentlichen zylindrisch ausgestaltete Ausgleichsstift 339 weist an seinem Umfang alternierend mit Bereichen ohne Zähne 3339 die in fünf Gruppen angeordneten Aussenzähne 3319 auf. Jeweils rechts an die Aussenzähne 3319 angrenzend sind fünf radial nach aussen abstehende, als rechte Winkel ausgestaltete Drehglieder 3329 am Umfang des Ausgleichsstifts 339 angeordnet. In der in Fig. 2 und in Fig. 4 gezeigten usammengebauten vorgespannten Stellung des Ventilantriebs beziehungsweise bestimmter Teile davon ist der Ausgleichsstift 339 so im Innenraum der Ausgleichshülse 329 angeordnet, dass die Zylindersegmente der Ausgleichshülse 329 jeweils angrenzend an einem Bereich des Ausgleichsstifts 339 ohne Zähne 3339 liegen, so dass der Ausgleichsstift 339 in Längsrichtung der Ausgleichshülse 329 bewegbar ist. Der Ausgleichsstift 339 ist dabei maximal nach oben bewegt angeordnet, so dass die Drehglieder 3329 jeweils in einer der Aussparungen 3229 der Ausgleichshülse 329 liegen.

Am oberen Rand des Bajonettrings 49 sind die zehn Schnappelemente 419 angeordnet, wobei im zusammengebauten Zustand des Ventilantriebs die Schnappelemente 419 so mit dem Gehäusekörper 119 verbunden sind, dass der Bajonettring 49 zum Gehäusekörper 119 verdrehbar ist. Der Bajonettring 49 weist fünf an seiner Innenseite ausgestaltete schräge Rampen 439 auf, die jeweils an ihren oberen Enden über eine Kuppe 459 in eine horizontale Terrasse 449 als Fixiereinrichtung übergehen. Die der Kuppe 459 abgewandten Seiten der Terrassen 449 sind jeweils durch eine als Anschlag ausgestaltete vertikale Verriegelkante 479 eines Balkens begrenzt, wobei die Balken jeweils eine der Verriegelkante 479 entgegengesetzt angeordnete vertikale Entriegelkante 469 aufweisen. Ein unterer Bereich des Bajonettrings 49 ist als Aufsetzbereich ausgestaltet, der an seinem inneren die Umfang L-förmigen Aufnahmen 429 aufweist. In der in Fig. 2 und in Fig. 4 gezeigten vorgespannten Stellung des Ventilantriebs beziehungsweise bestimmter Teile davon liegen die fünf Drehglieder 3329 jeweils auf einer der Terrassen 449 auf, so dass das Ausgleichsteil 339 maximal nach oben bewegt gehalten ist und die Betätigungsfeder 79 (in Fig. 4 und Fig. 5 nicht gezeigt) zusammengedrückt ist.

Die fünf Schwerter 519 der Bajonettmutter 59 werden beim Aufsetzen des Bajonettrings 49 jeweils in eine der Schwertaufnahmen 3229 des Hubteils 329 eingeführt, so dass bei aufgesetztem Ventilantrieb das Hubteil 329 drehfest mit dem Bajonettring 59 verbunden ist. Weiter weist der Bajonettring 59 an seinem Umfang die komplementär zu den L-förmigen Aufnahmen 429 des Bajonettrings ausgestaltete L-förmige Vorsprünge 529 auf.

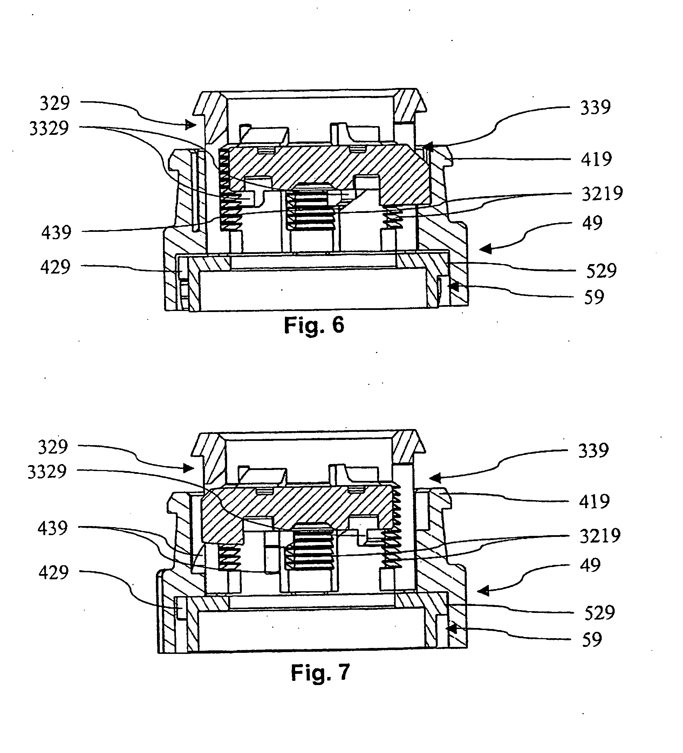

Fig. 5, Fig. 6 und Fig. 7 zeigen die einigen für die Auslösung des Ventilantriebs relevanten Teile des Ventilantriebs von Fig. 1 während dem der auf das Ventil 99 aufgesetzte Ventilantrieb ausgelöst wird. Von der Fig. 5 zur Fig. 6 wird der Ventilantrieb über manuelles Drehen des Bajonettrings 49 im Uhrzeigersinn aus der vorgespannten Stellung gelöst. Dabei werden die Drehglieder 3329 erst jeweils über eine der Kuppen 459 angehoben, so dass das Ausgleichsteil 339 entgegen der Federkraft der Betätigungsfeder 79 (in Fig. 5, Fig. 6 und Fig. 7 nicht gezeigt) mitangehoben wird. Dieses Anheben benötigt einen gewissen Kraftaufwand von aussen auf den Bajonettring 49, der gross genug ist, dass das Hubelement 39 in seiner vorgespannten Position gesichert ist. Mittels des Drehens des Bajonettrings 49 bis die Kuppen 459 unter den Drehgliedern 3329 liegen, greifen die L-förmigen Vorsprünge 529 der Bajonettmutter 59 bereits ausreichend in die L-förmigen Aufnahmen 429 des Bajonettrings 49, so dass der Ventilantrieb in seiner axialen Richtung fest am Ventil 99 befestigt ist. Mindestens bis zu diesem Drehpunkt des Bajonettrings 49 sind die Drehglieder 3329 in den Aussparungen 3249 des Hubteils 329 angeordnet, so dass der Ausgleichsstift 339 bis dahin nicht zum Hubteil 329 verdreht wird.

Wie in Fig. 6 am besten ersichtlich, wird der Bajonettring 49 dann weitergedreht, so dass die Drehglieder 3329 jeweils auf einer der Rampen 439 angeordnet sind. Dabei bewegt die Federkraft der Betätigungsfeder 79 (in Fig. 5, Fig. 6 und Fig. 7 nicht gezeigt) den Ausgleichsstift 339 nach unten bis die Ventilspindel 919 vollständig in den Ventilkörper gedrückt ist und der Ausgleichsstift 339 dadurch axial fixiert ist. Gleichzeitig kann über diese Federkraft der Bajonettring 49 entsprechend automatisch weiter gedreht werden.

Von Fig. 6 nach Fig. 7 wird der Bajonettring so weiter gedreht, dass die Verriegelkanten 479 des Bajonettrings 49 an den Drehgliedern 3329 des Ausgleichsstifts 339 wirken. Dabei wird der Ausgleichsstift 339 zum Hubteil 329 verdreht, bis die Aussenzähne 3319 des Ausgleichsstifts 339 in die Innenzähne 3219 des Hubteils 329 greifen. Das Hubteil 329 und der Ausgleichsstift 339 sind in dieser Position miteinander verriegelt und das Schliessmass des Ventils 99 ist im Ventilantrieb eingestellt. Gleichzeitig ist der Bajonettring 49 in dieser Position auf der Bajonettmutter 59 eingerastet.

Bei der Demontage des Ventilantriebs wird der Bajonettring 49 im Gegenuhrzeigersinn manuell gedreht, wodurch sich die Rampen 439 wiederum unter die Drehglieder 3329 des Ausgleichsstifts 339 drehen und diesen in seine vorgespannte Position hebt. Die Rampen 439 selbst sowie spätesten die Entriegelkanten 479 drehen den Ausgleichsstift 339 aus der Verzahnung und entkoppeln die Einstellung des Schliessmasses. Der Ausgleichsstift 339 verharrt dann wiederum in der oberen gesicherten Stellung und das Hubelement 39 befindet sich wiederum in der vorgespannten Position. Da bei dieser Drehung auch der Bajonettring 49 wiederum von der Bajonettmutter 59 entriegelt wird, kann der Ventilantrieb einfach vom Ventil 99 abgezogen werden.

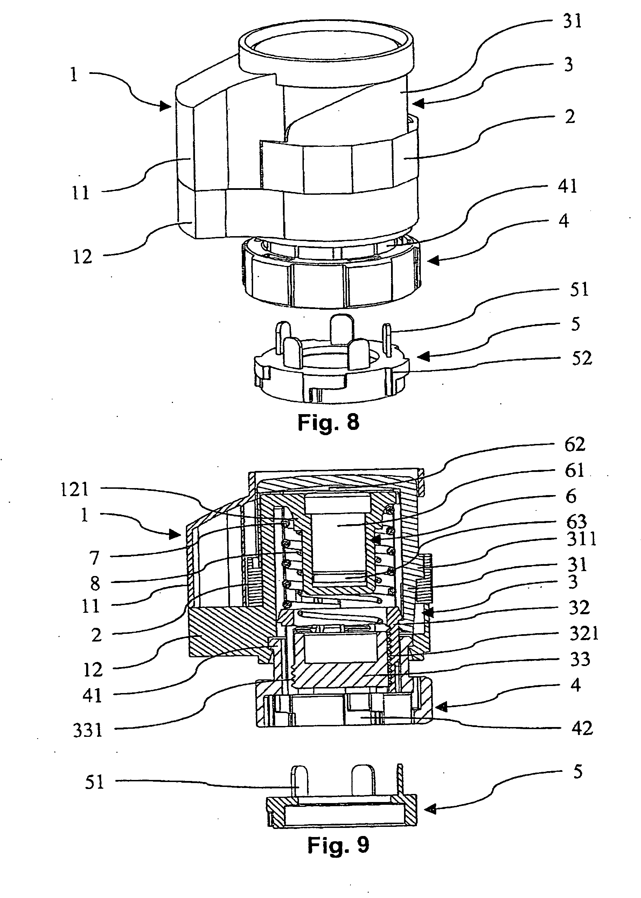

Fig. 8 zeigt eine perspektivische Ansicht eines zweiten Ausführungsbeispiels eines Ventilantriebs, mit dem die Funktionsweise von Ventilantrieben und insbesondere der Ausgleich eines Schliessmasses im Folgenden detaillierter beschrieben wird. Der Ventilantrieb umfasst ein Gehäuse 1 mit einem Deckel 11 und einer Antriebsaufnahme 12. Das Gehäuse ist im Wesentlichen zylindrisch ausgestaltet und weist auf seiner linken Seite eine Ausbuchtung auf. Der Deckel 11 ist im Wesentlichen hohlzylindrischen ausgestaltet, wobei er auf seiner rechten Seite und nach oben hin jeweils eine Öffnung aufweist. Im Hohlraum des Gehäuses 1 ist ein Hubelement 3 mit einer Hubkappe 31 angeordnet. Zwischen dem Deckel 11 und der Antriebsaufnahme 12 weist der Ventilantrieb eine um die Hubkappe 31 drehbare Kulisse 2 auf. Nach unten schliesst ein Bajonettring 4 an das Gehäuse 1 an, der über Schnappelemente 41 mit der Antriebsaufnahme 12 verbunden ist. In der in Fig. 8 gezeigten Ausgangsstellung, in der der Ventilantrieb beispielsweise vertrieben werden kann, umfasst der Ventilantrieb Weiter einen vom Gehäuse 1 losgelösten im Wesentlichen ringförmigen Adapter 5, der an seiner Aussenseite mehrere L-förmige Vorsprünge 52 und an seinem oberen Rand angeordnete sich in Richtung des Gehäuses 1 erstreckende Schwerter 51 aufweist.

In Fig. 9 ist der Ventilantrieb von Fig. 8 in der Ausgangsstellung im Querschnitt gezeigt. Darin ist ersichtlich, dass die Hubkappe 31 im Wesentlichen hohlzylindrisch ausgestaltet ist und nach unten hin mit einer einen zylindrischen Innenraum bildenden Ausgleichshülse 32 verbunden ist, in deren Innenraum ein Ausgleichsstift 33 als Ausgleichsteil angeordnet ist. Weiter umfasst die Hubkappe 31 einen Vorsprung 311 der an einer Fläche der Kulisse 2 anliegt. Die Ausgleichshülse 32 weist auf der rechten Seite sich in den Innenraum der Ausgleichshülse 32 erstreckende Innenzähne 321 auf und der Ausgleichsstift 33 auf der linken Seite sich nach aussen erstreckende Aussenzähne 331.

Die Antriebsaufnahme 12 des Gehäuses 1 erstreckt sich in den innenraum der Hubkappe 31 hinein, wobei sie darin einen nach oben geöffneten Behälter 121 bildet, in dem ein thermischer Antrieb 6 als Aktor angeordnet ist. Der thermischer Antrieb 6 weist ein ein Dehnelement umschliessendes Gehäuse 61 auf, das auf seiner unteren Seite mit einer Widerstandsheizung 63 verbunden ist und an dessen oberen Seite ein Kolben 62 herausragt. Das äussere obere Längsende des Kolbens 62 liegt an der Hubkappe 31 an. Zwischen der Antriebsaufnahme 12 und der Ausgleichshülse 32 ist eine Betätigungsfeder 7 als Druckelement eingespannt, die die Ausgleichshülse 32 vom thermischen Antrieb 6 wegbewegt. Zwischen der Antriebsaufnahme 12 und dem Ausgleichsstift 33 ist eine Ausgleichsfeder 8 als weiteres Druckelement eingespannt, die den Ausgleichsstift 33 ebenfalls vom thermischen Antrieb 6 wegbewegt. Der Bajonettring 4 weist an seiner Innenseite korrespondierend zu den L-Vorsprüngen 52 (in Fig. 9 nicht ersichtlich) des Adapters 5 ausgestaltete L-Aufnahmen 42 auf.

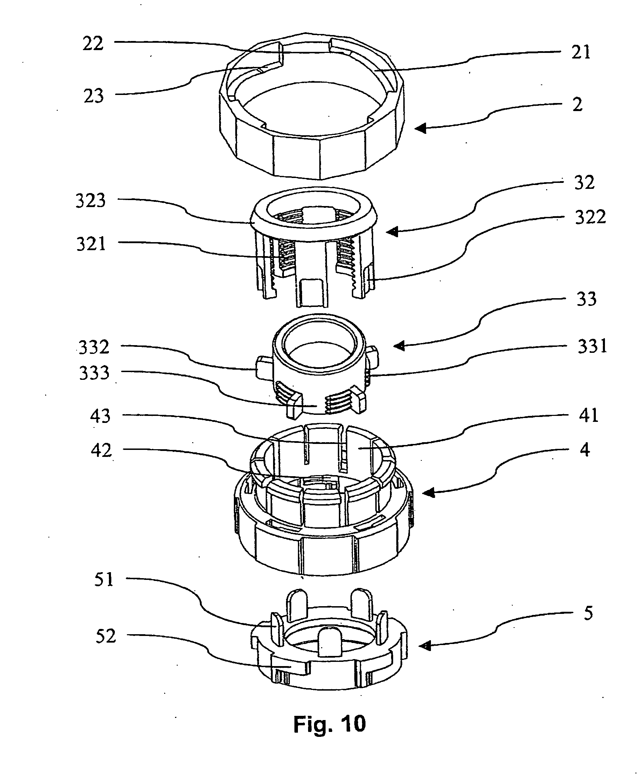

Fig. 10 zeigt einige für die Teile des Ventilantriebs von Fig. 8 in einer detaillierten perspektivischen Explosionsansicht, wobei die Perspektive bei jedem der Teile so angepasst ist, dass die wesentlichen Elemente des jeweiligen Teils ersichtlich sind.Die Kulisse 2 weist drei an ihrer Innenseite ausgestaltete Schrägflächen 21 auf, die jeweils an ihren oberen Enden in eine horizontale Fixierfläche 22 und jeweils an ihren unteren Enden in eine horizontale Ausgangsfläche 23 übergehen. In der in Fig. 8 und in Fig. 9 gezeigten Ausgangsposition des Ventilantriebs liegen die drei Vorsprünge 311 der Hubkappe 31 (in Fig. 10 nicht ersichtlich) jeweils auf der Ausgangsfläche 23 der Kulisse 2 auf.

Die Ausgleichshülse 32 bildet mittels fünf vertikaler voneinander beabstandeter Zylindersegmente, die über einen einen Vorsprung 323 aufweisenden Ring miteinander verbunden sind, einen zylinderförmigen Innenraum. Wie in Fig. 9 ersichtlich, greift der Vorsprung 323 in zusammengebautem Ausgangszustand des Ventilantriebs hinter einen entsprechenden Vorsprung der Hubkappe 31, so dass die Ausgleichshülse 32 und die Hubkappe 31 als Hubteil miteinander verbunden sind. Die Zylindersegmente weisen an ihren Innenseiten die Innenzähne 321 auf und im unteren Bereich ihrer Aussenseiten nach unten geöffnete Schwertaufnahmen 322. Die Schwertaufnahme 322 sind entsprechend den Schwertern 51 des Adapters 5 ausgestaltet.

Der im Wesentlichen hohlzylindrische Ausgleichsstift 33 weist im unteren Bereich seines Umfangs die alternierend mit Bereichen ohne Zähne 333 in fünf Gruppen angeordneten Aussenzähne 331 auf. Jeweils rechts an die Aussenzähne 331 angrenzend sind vertikale radial nach aussen abstehende Schwerter 332 am Umfang angeordnet. Im in Fig. 9 gezeigten zusammengebauten Ausgangszustand des Ventilantriebs ist der Ausgleichsstift 33 so im Innenraum der Ausgleichshülse 32 angeordnet, dass die Zylindersegmente der Ausgleichshülse 32 jeweils angrenzend an einem Bereich ohne Zähne 333 des Ausgleichsstifts 33 liegen, so dass der Ausgleichsstift 33 in Längsrichtung der Ausgleichshülse 32 bewegbar ist.

Am oberen Rand des Bajonettrings 4 sind die zehn Schnappelemente 41 angeordnet, wobei jeder zweite Zwischenspalt zwischen den Schnappelementen 41 als Scharte 43 ausgestaltet ist. Im zusammengebauten Zustand des Ventilantriebs ist jeweils ein Schwert 332 des Ausgleichsstifts 33 in einer der Scharten 43 angeordnet, so dass einerseits bei einer Drehung des Bajonettrings 4 der Ausgleichsstift 33 mitdreht und dass andererseits die Bewegung des Ausgleichsstifts 33 in Längsrichtung der Ausgleichshülse 32 nach unten durch das Ende der Scharten 43 begrenzt ist.

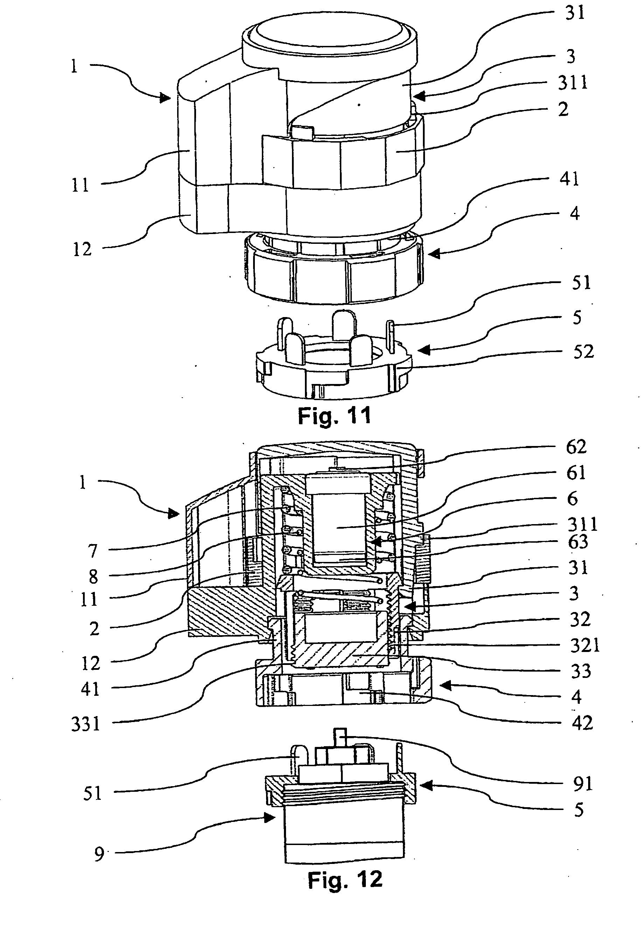

In Fig. 11 und in Fig. 12 ist der Ventilantrieb in einer vorgespannten Stellung gezeigt, wobei die Kulisse 2 typischerweise manuell im Uhrzeigersinn soweit gedreht ist, dass die Vorsprünge 311 der Hubkappe 31 entlang der Schrägflächen 21 der Kulisse 2 bis auf deren Fixierfläche 22 bewegt sind. Die Hubkappe 31 ist damit zusammen mit der Ausgleichshülse 32 entgegen der Federkraft der Betätigungsfeder 7 nach oben gehoben und die Betätigungsfeder 7 ist vorgespannt. Dabei ist die Hubkappe 31 auch vom Kolben 62 des thermischen Antriebs 6 abgehoben. Der Ausgleichsstift 33, der in dieser vorgespannten Stellung wie auch in der Ausgangsstellung nicht mit der Ausgleichshülse 32 verriegelt ist, ist durch die Ausgleichsfeder 8 bis an das Ende der Scharten 43 des Bajonettrings 4 nach unten gedrückt, so dass er in maximal möglicher Entfernung zum thermischen Antrieb 6 angeordnet ist. Der Adapter 5 ist mittels eines Gewindes an einem Ventil 9 befestigt, so dass sich eine Betätigungsspindel 91 des Ventils 9 zentral im Adapter 5 parallel zu den Schwertern 51 nach oben erstreckt.

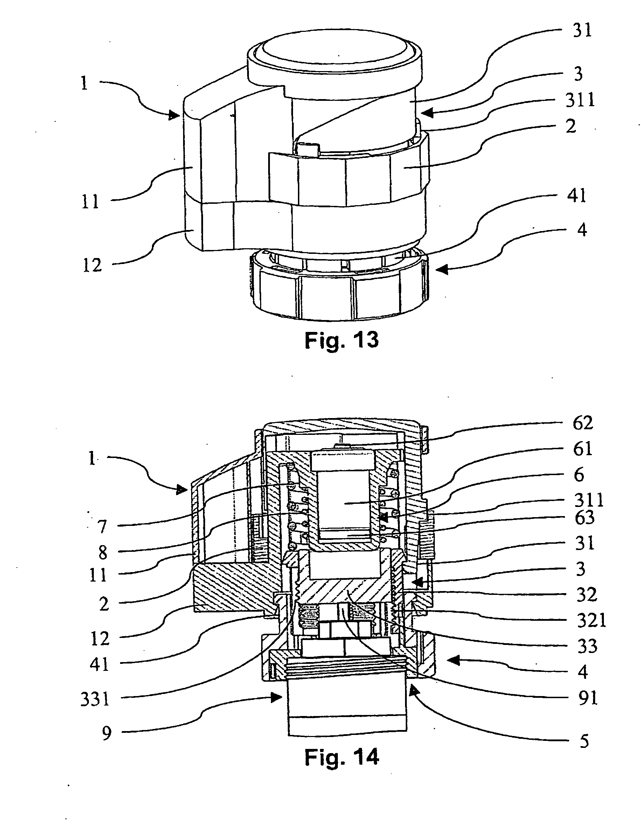

Fig. 13 und Fig. 14 zeigen den Ventilantrieb in einem auf das Ventil 9 aufgesetzten unverriegelten und vorgespannten Zustand. Beim Aufsetzen des Ventilantriebs auf das Ventil 9 liegt die Betätigungsspindel 91 an den Ausgleichsstift 33 an und drückt diesen entgegen der Federkraft der Ausgleichsfeder 8 nach oben. Da gleichzeitig die Ausgleichshülse 32 durch die Betätigungsfeder 7 nach unten gedrückt ist, ist der Ausgleichsstift 33 dabei in der Ausgleichshülse 32 in Hubrichtung so weit nach oben bewegt, wie es erforderlich ist, um das Schliessmass des Ventils 9 aufzunehmen. Ebenfalls werden beim Aufsetzen die Schwerter 51 des Adapters 5 in die Schwertaufnahmen 322 der Ausgleichshülse 32 eingeführt und somit das Ventil 9 und die Ausgleichshülse 32 miteinander drehfest verbunden. Damit ein Hochdrücken des Ausgleichsstifts 33 durch die Betätigungsspindel 91 möglich ist, ist die Federkraft der Ausgleichsfeder 8 kleiner ausgelegt als die Federkraft einer Rückstellfeder des Ventils 9, mit der die Betätigungsspindel 91 aus dem Ventil 9 gedrückt wird.

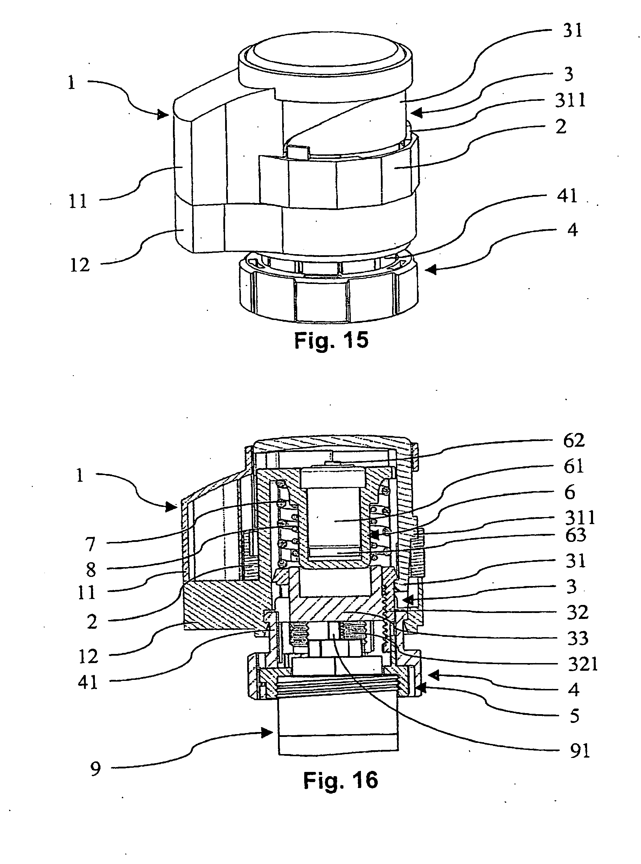

Wie in Fig. 15 und in Fig. 16 gezeigt wird der Ventilantrieb nach dem oben beschriebenen Aufsetzen auf dem Ventil 9 verriegelt. Dazu ist der Bajonettring 4 im Gegenuhrzeigersinn verdreht, so dass die L-Vorsprünge 52 des Adapters 5 in die L-Aufnahmen 42 des Bajonettrings 4 greifen. Mit dem Verdrehen des Bajonettrings 4 ist mittels der in den Scharten 43 des Bajonettrings 4 angeordneten Schwerter 332 des Ausgleichsstifts 33 auch der Ausgleichsstift 33 verdreht. Da die Ausgleichshülse 32 mittels der Schwerter 51 des Adapters 5 drehfest gehalten ist, ist der Ausgleichsstift 33 in der Ausgleichshülse 32 so gedreht, dass die Innenzähne 321 der Ausgleichshülse 32 in die Aussenzähne 331 des Ausgleichsstifts 33 greifen. Damit ist der Ausgleichsstift 33 in Hubrichtung mit der Ausgleichshülse 32 verriegelt und das Hubelement 3 als Ganzes bewegbar.

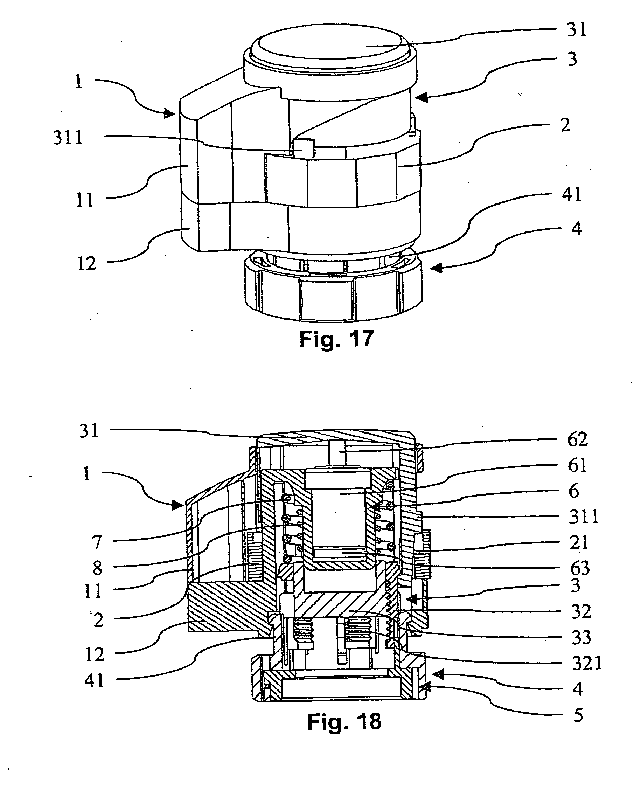

Fig. 17 und Fig. 18 zeigen den Ventilantrieb in Betriebszustand, in dem die Kulisse 2 wieder im Gegenuhrzeigersinn in seine Ausgangsstellung gedreht ist. Der thermischer Antrieb 6 ist aktiviert, indem die Widerstandsheizung 63 mit Strom beaufschlagt ist, wodurch das im Gehäuse 1 angeordnete Dehnelement erwärmt wird. Dadurch dehnt sich das Dehnelement aus und schiebt den Kolben 62 aus dem Gehäuse 61. Die Hubkappe 31 und mit ihr das ganze Hubelement 3 ist dadurch in Hubrichtung angehoben und die Betätigungsfeder 7 ist gespannt. Die Rückstellfeder des Ventils 9 drückt die Betätigungsspindel 91 entsprechend der Hubbewegung des Hubelements 3 aus dem Ventil 9 und stellt ein Stellelement des Ventils 9 zurück. Durch die Öffnung des Gehäuses 1 ist in diesem Zustand von ausserhalb des Ventilantriebs ersichtlich, dass das Hubelement 3 angehoben ist und der thermische Antrieb 6 aktiviert.

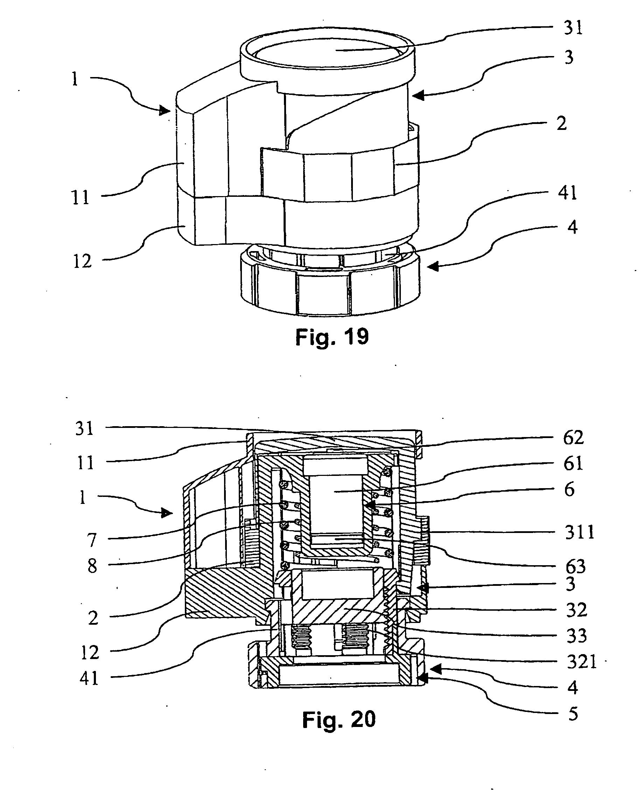

In Fig. 19 und Fig. 20 ist der Ventilantrieb im Betriebszustand gezeigt, wobei der thermische Antrieb 6 nicht aktiviert ist. Der Kolben 62 des thermischen Antriebs 6 ist dabei in das Gehäuse 61 eingefahren. Das Hubelement 3 ist durch die Betätigungsfeder 7 so abgesenkt, dass die Betätigungsspindel 91 des Ventils 9 in das Ventil 9 gedrückt ist. Wiederum ist durch die Öffnung des Gehäuses 1 von ausserhalb des Ventilantriebs ersichtlich, dass das Hubelement 3 abgesenkt ist und der thermische Antrieb 6 nicht aktiviert.

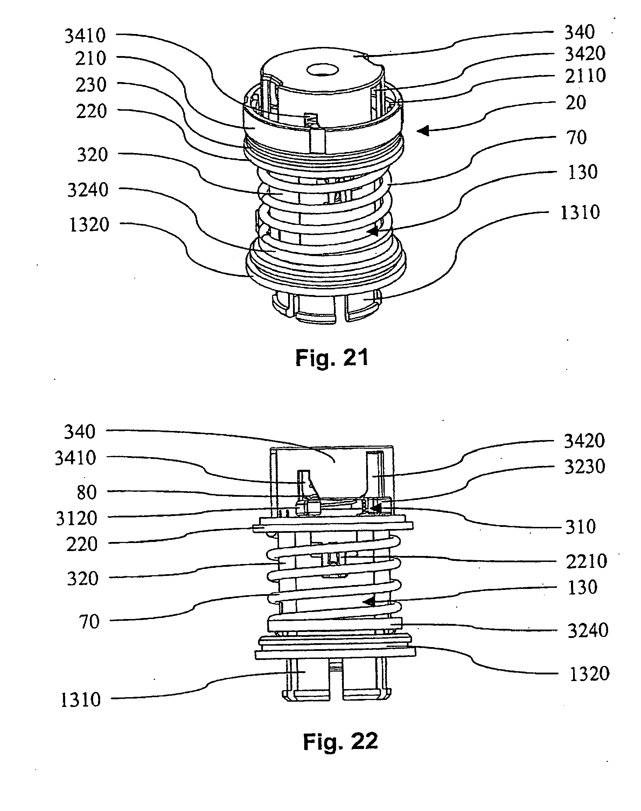

Fig. 21 zeigt eine perspektivische Ansicht eines dritten Ausführungsbeispiels eines Ventilantriebs, mit dem ebenfalls die Funktionsweise von Ventilantrieben und insbesondere der Ausgleich eines Schliessmasses im Folgenden detaillierter beschrieben wird, wobei für eine bessere Übersichtlichkeit der Ventilantrieb ohne äusseres Gehäuse dargestellt ist. Der Ventilantrieb umfasst ein zwei Hohlzylindersegmente aufweisendes Grundelement 130, wobei die Hohlzylindersegmente nach unten hin in sechs Schnappelemente 1310 übergehen. Die Hohlzylindersegmente sind in ihrem unteren Bereich fest mit einem ringförmigen Sockel 1320 verbunden, an dem das äussere Gehäuse (in Fig. 21 nicht gezeigt) befestigbar ist. Auch umfasst der Ventilantrieb einen nach unten hin offenen im Wesentlichen hohlzylindrischen Deckel 340 mit zwei vertikal ausgestalteten Betriebsscharten 3410, zwei vertikal ausgestalteten Ausgleichsscharten 3420 und einer Öffnung auf seiner Oberseite. Um den untersten Bereich des Deckels 340 herum ist eine drehbare Kulisse 210 einer Betätigung 20 angeordnet. Die Betätigung 20 umfasst weiter einen Kulissensockel 220, der mit dem Deckel 340 drehfest verbunden ist, und eine zwischen der Kulisse 210 und dem Kulissensockel 220 angeordnete und entgegen dem Uhrzeigersinn spannbare Drehfeder 230. Die Kulisse 210 weist zwei an seinem Innenrand ausgestaltete äussere Schrägflächen 2110 auf.

Der Ventilantrieb umfasst weiter eine Ausgleichshülse 320, die durch den Kulissensockel 220 hindurch angeordnet ist und an ihrem unteren Ende einen Federrand 3240 aufweist. Zwischen dem Kulissensockel 220 und dem Federrand 3240 ist eine Betätigungsfeder 70 als Druckelement angeordnet. Am unteren Ende des Ventilantriebs ist ein Bajonettring (in Fig. 21 nicht gezeigt) auf die Schnappelemente 1310 des Grundelements 130 drehbar aufgeschnappt, mittels welchem der Ventilantrieb mit einem Adapter (in Fig. 21 nicht gezeigt) verbindbar ist.

In Fig. 22 ist der Ventilantrieb von Fig. 21 gezeigt, wobei zur besseren Übersichtlichkeit die Kulisse 210 und die Drehfeder 230 der Betätigung 20 nicht dargestellt sind. Im Innern des Deckels 340 ist eine Hubkappe 310 mit einem radial aus dem Deckel 340 ragenden Drehglied 3120 als Hubteil und eine Ausgleichsfeder 80 als weiteres Druckelement angeordnet. Die Ausgleichshülse 320 umfasst einen radial aus dem Deckel 340 ragenden Vorsprung 3230. In der in Fig. 21 und in Fig. 22 gezeigten Ausgangsstellung ist das Drehglied 3120 am unteren Ende der Betriebsscharte 3410 angeordnet und der Vorsprung 3230 am unteren Ende der Ausgleichsscharte 3420. Der Kulissensockel 220 weist zwei nach unten ragende Klemmen 2210 auf, über die er auf dem Grundelement 130 aufgeklemmt ist.

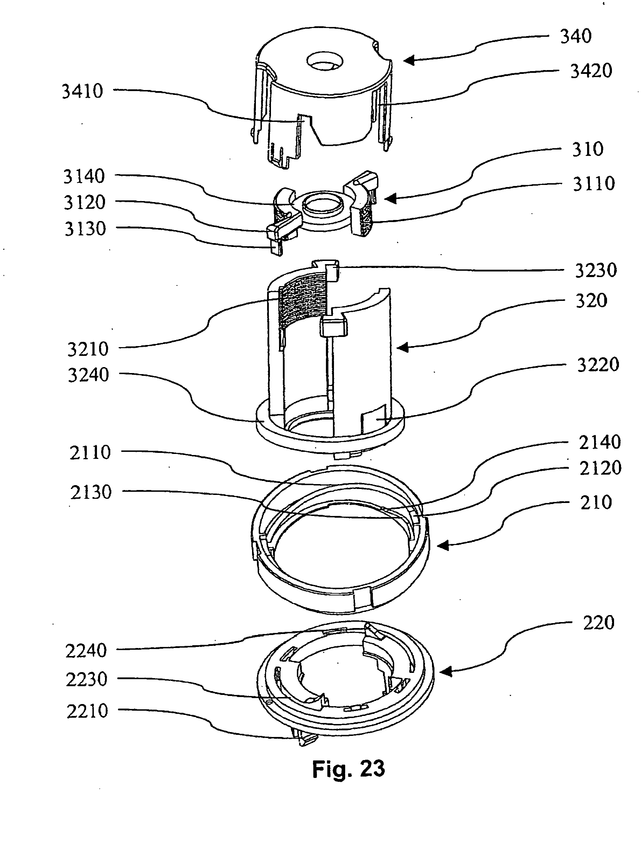

Fig. 23 zeigt einige Teile des Ventilantriebs von Fig. 21 in einer perspektivischen Explosionsansicht, wobei die Perspektive bei jedem der Teile so angepasst ist, dass die wesentlichen Elemente des jeweiligen Teils ersichtlich sind. Die Betriebsscharten 3410 und die Ausgleichsscharten 3420 des Deckels 340 sind jeweils nach unten hin in eine Richtung aufgeweitet ausgestaltet, wobei ihre Seitenwände in diese Richtungen jeweils weniger lang sind als in eine entgegengesetzte Richtung. Die Hubkappe 310 weist einen Ringteil 3140 auf, um den herum zwei entgegengesetzt angeordnete, im Wesentlichen zylindersegmentförmige Seitenwände angeordnet sind. Die Seitenwände weisen an ihren Aussenseiten Aussenzähne 3110 auf. An einem Ende im Gegenuhrzeigersinn der Seitenwände ist in deren oberen Bereichen jeweils das radial nach aussen abstehende Drehglied 3120 angeordnet, das in ein vertikal nach unten ragendes Schwert 3130 mündet. In der in Fig. 21 und in Fig. 22 gezeigten Ausgangsstellung ist die Hubkappe 310 im innern des Deckels 340 angeordnet, so dass die Drehglieder 3120 jeweils an der im Uhrzeigersinn die Betriebsscharte 3410 begrenzenden Seitenwand einer der beiden Betriebsscharten 3410 anliegen.

Die Ausgleichshülse 320 weist zwei einander gegenüber angeordnete, zylinderförmigsegmentförmige Seitenwände auf, die an ihrem unteren Ende über den ringförmigen Federrand 3240 mittels zweier Schnappelemente 3220 fest miteinander verbunden sind. Gegen ihr oberes Ende zu weisen die Seitenwände an ihren Innenseiten Innenzähne 3210 auf und an ihrem unteren Ende an den Aussenseiten jeweils eines der zwei Schnappelemente 3220. Die beiden Vorsprünge 3230 sind jeweils an einem Ende im Uhrzeigersinn der zugehörigen Seitenwand oben an diesen radial nach aussen abstehend ausgestaltet. In der in Fig. 21 und in Fig. 22 gezeigten Ausgangsstellung ist die Ausgleichshülse 320 so angeordnet, dass die Vorsprünge 3230 jeweils an der im Gegenuhrzeigersinn die Ausgleichsscharte 3420 begrenzenden Seitenwand einer der beiden Ausgleichsscharten 3420 anliegen. Weiter ist in der Ausgangsstellung die Hubkappe 310 am oberen Ende im Innern der Ausgleichshülse 320 angeordnet, wobei die Aussenzähne 3110 der Hubkappe 310 mit den Innenzähnen 3210 der Ausgleichshülse 320 in Eingriff sind. Die Hubkappe 310 und die Ausgleichshülse 320 sind somit miteinander verriegelt, so dass sie nicht in Hubrichtung zueinander bewegbar sind.

Die beiden äusseren Schrägflächen 2110 der Kulisse 210 münden nach oben hin jeweils in eine Fixierfläche 2120 als Fixierelement. Zusätzlich weist die Kulisse zwei innere Schrägflächen 2130 auf, die kürzer ausgestaltet sind als die äusseren Schrägflächen 2110 und die an ihrem unteren Ende jeweils in einen Absatz 2140 münden. In der in Fig. 21 und in Fig. 22 gezeigten Ausgangsstellung ist die Kulisse 210 so um den Deckel 340, die Hubkappe 310 und die Ausgleichshülse 320 herum angeordnet, dass die beiden Vorsprünge 3230 der Ausgleichshülse 320 unterhalb jeweils einer äusseren Schrägfläche 2110 liegen. Weiter überragen die Vorsprünge 3230 die Drehglieder 3120 in radialer Richtung, so dass sich die Drehglied 3120 nicht bis zu den äusseren Schrägflächen 2110 erstrecken.

Der Kulissensockel 220 weist zwei jeweils einander gegenüberliegende vertikale Paare von Deckelaufnahmen 2220 und zwei einander gegenüberliegende vertikale Schwertschlitze 2230 auf. Die Schwertschlitze 2230 sind über einen bestimmten Bereich in Umfangrichtung ausgestaltet, wobei innen an den Schwertschlitzen 2230 gegen deren Ende im Gegenuhrzeigersinn zu jeweils eine Rampe 2240 angeordnet ist. In der in Fig. 21 und in Fig. 22 gezeigten Ausgangsstellung ist der Kulissensockel 220 mittels der Deckelaufnahmen 2220 fest mit dem Deckel 340 verbunden. Die beiden Schwerter 3130 der Hubkappe 310 sind jeweils durch eine der Schwertschlitze 2230 hindurch angeordnet, wobei sie sich in einem der Rampe 2240 abgewandten Endbereich der Schwertschlitze 2230 befinden.

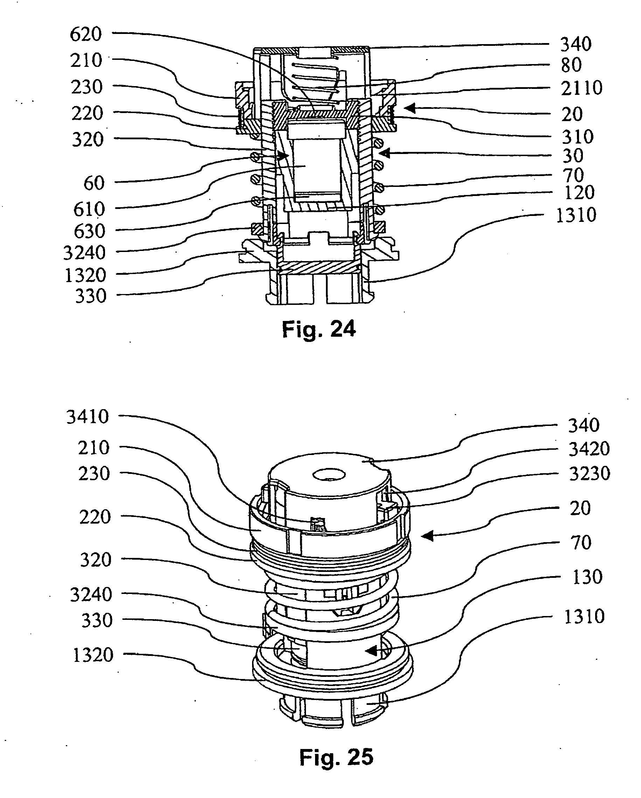

in Fig. 24 ist ein Querschnitt des Ventilantriebs von Fig. 21 gezeigt, wobei eine Antriebsaufnahme 120 ersichtlich ist. Die Antriebsaufnahme 120 weist einen Behälter auf, in dem ein thermischer Antrieb 60 als Aktor mit einem ein Dehnelement einschliessenden Gehäuse 610, einem nach oben aus dem Gehäuse 610 ragenden Kolben 620 und einer unterhalb des Gehäuses 610 liegenden Widerstandsheizung 630 angeordnet ist. Die Hubkappe 310 liegt mit seiner Unterseite an einer Oberseite des Kolbens 620 an. Zwischen der Oberseite des Deckels 340 und der Oberseite der Hubkappe 310 ist die Ausgleichsfeder 80 angeordnet. Mit der Ausgleichshülse 320 ist nach unten hin ein Ausgleichsstift 330 als Ausgleichsteil fest verbunden.

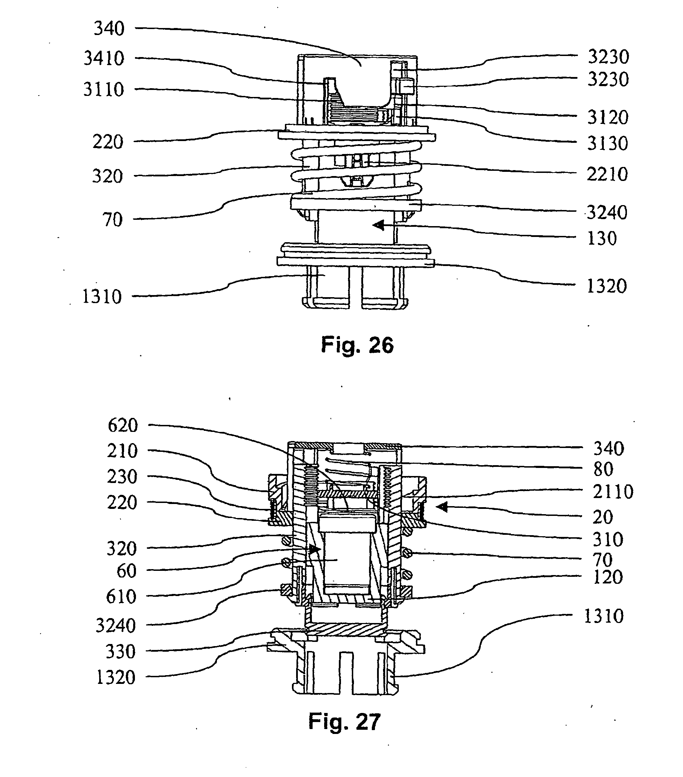

In der in Fig. 25, in Fig. 26 und in Flg. 27 gezeigten vorgespannten Stellung des Ventilantriebs von Fig. 21 ist die Kulisse 210 typischerweise manuell im Gegenuhrzeigersinn gedreht. Dabei ist die Hubkappe 310 im Verhältnis zur Ausgleichshülse 320 verdreht, so dass die Aussenzähne 3110 in den Bereichen der Ausgleichshülse 320 angeordnet sind, die keine Innenzähne 3210 aufweisen. Somit sind in dieser Stellung Hubkappe 310 und Ausgleichshülse 320 voneinander entriegelt. Während der erwähnten Drehung der Kulisse 210 wird die Drehfeder 230 gespannt und mittels des am Absatz 2140 der Kulisse 210 anliegenden Drehglieds 3120 die Hubkappe 310 gedreht. Ist das Drehglied 3120 während dieser Drehung der Kulisse 210 bei der Rampe 2240 des Kulissensockels 220 angelangt, wird es durch dieses über den Absatz 2140 ausgehoben und durch die innere Schrägfläche 2130 angehoben. Gleichzeitig wird während dieser Drehung die Ausgleichshülse 320 durch die an den äusseren Schrägflächen 2110 anliegenden Vorsprüngen 3230 bis auf die Fixierflächen 2120 angehoben, so dass in der vorgespannten Stellung sowohl die Hubkappe 310 als auch die Ausgleichshülse 320 angehoben sind und sowohl die Drehglieder 3120 als auch die Vorsprünge 3230 in den Ausgleichsscharten 3420 angeordnet sind.

Die Betätigungsfeder 70 ist in einer gespannten Position, wobei sie die Ausgleichshülse 320 entgegen der Hubrichtung und den Ausgleichsstift 330 weg vom thermischen Antrieb 60 drückt. Damit sind auch die Vorsprünge 3230 der Ausgleichshülse 320 auf die Fixierflächen 2120 der Kulisse 210 gedrückt, so dass die Kulisse 210 trotz der gespannten Drehfeder 230 in einer stabilen Position gehalten ist. Die Ausgleichsfeder 80 drückt die Hubkappe 310 in Richtung des thermischen Antriebs 60, so dass sie entgegen der Hubrichtung in der Ausgleichshülse 320 bewegt ist. In der vorgespannten Stellung wird der Ventilantrieb mittels einem Adapter auf einem Ventil montiert, so dass ein oberes Ende der Betätigungsspindel des Ventils unterhalb des Ausgleichsstifts 330 angeordnet ist.

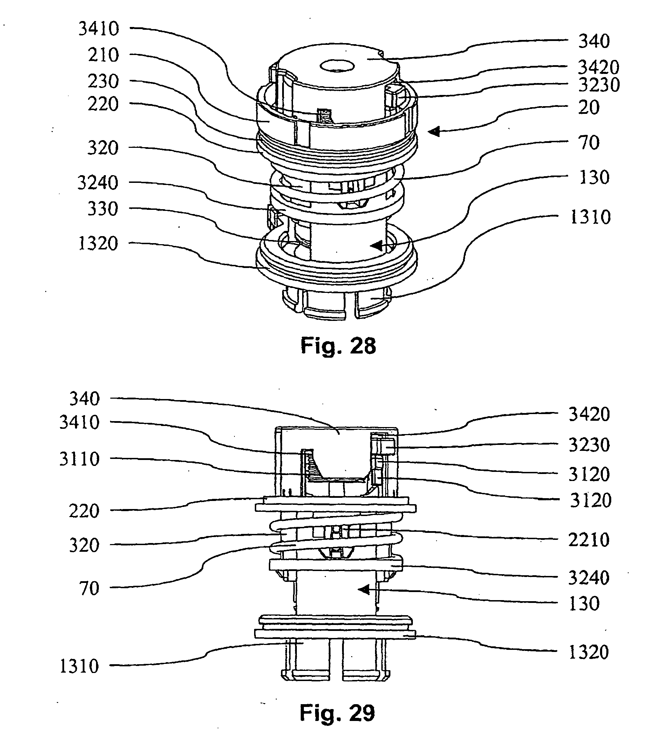

Fig. 28, Fig. 29 und Fig. 30 zeigen den Ventilantrieb von Fig. 21 in einer Auslösstellung, wobei der thermischer Antrieb 60 aktiviert ist. Im Betrieb ist der Ventilantrieb dabei auf einem Ventil montiert. Dazu ist die Widerstandsheizung 630 mit Strom beaufschlagt und der Kolben 620 aus dem Gehäuse 610 ausgefahren. Die Hubkappe 310 ist durch den Kolben 620 in Hubrichtung entgegen der Federkraft der Ausgleichsfeder 80 angehoben. Während dieses Anhebens liegen die Drehglieder 3120 der Hubkappe 310 an den Vorsprüngen 3230 der Ausgleichshülse 320 an, so dass in der Auslösstellung die Ausgleichshülse 320 und der Ausgleichsstift 330 zusammen mit der Hubkappe 310 angehoben sind.

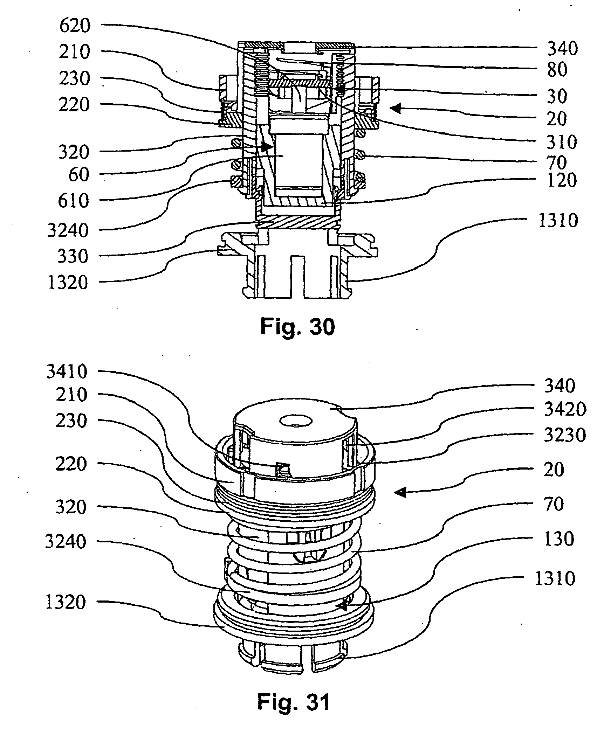

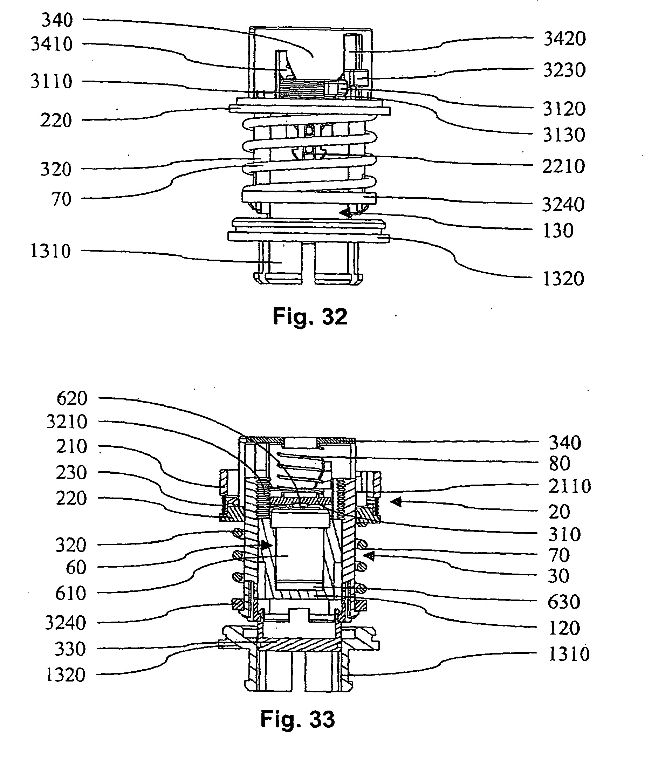

In Fig. 31, in Fig. 32 und in Fig. 33 ist der Ventilantrieb von Fig. 21 in einer Kompensationsstellung gezeigt, wobei er dabei im Betrieb auf dem Ventil montiert ist. Da die Betätigungsfeder 70 die Vorsprünge 3230 der Ausgleichshülse 320 nicht mehr an die Fixierfläche 2120 der Kulisse 210 drückt, ist die Kulisse 210 durch die Federkraft der Drehfeder 230 im Uhrzeigersinn zurückgedreht. Dabei ist die Hubkappe 310 ebenfalls zusammen mit der Kulisse 210 zurückgedreht. Die Ausgleichshülse 320 und der Ausgleichsstift 330 sind soweit nach unten bewegt, bis sie auf der Betätigungsspindel des Ventils aufliegen. Somit ist die Hubkappe 310 an einer beliebigen auf das Schliessmass des Ventils angepassten Lage mit der Ausgleichshülse 320 verriegelt.

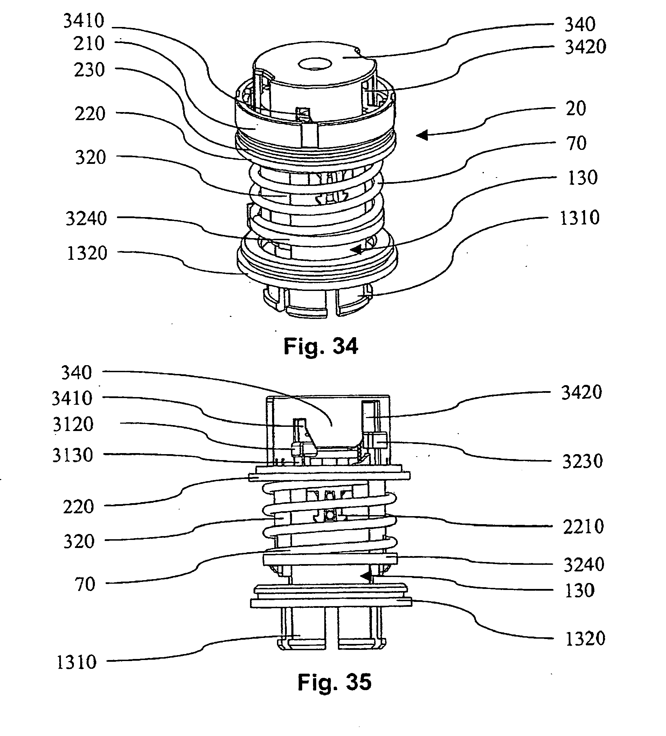

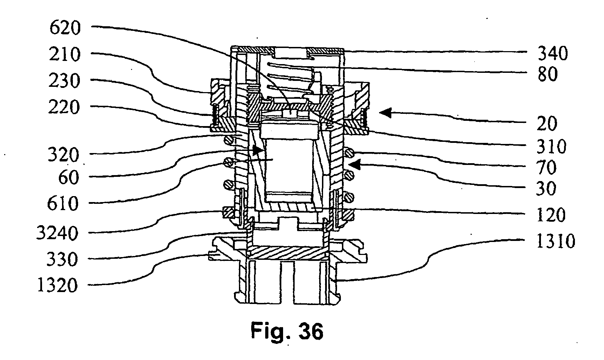

Fig. 34, Fig. 35 und Fig. 36 zeigen den Ventilantrieb von Fig. 21 im Betriebszustand. Die Hubkappe 310, die Ausgleichshülse 320 und die Ausgleichsstifte 330 bilden dabei ein auf die Betätigungsspindel wirkendes Hubelement, welches entsprechend der oben beim zweiten Ausführungsbeispiel dargelegten Weise mittels des thermischen Antriebs 60 und der Betätigungsfeder 70 das Ventil betätigen.

Zu den vorbeschriebenen erfindungsgemässen Vorrichtungen sind weitere konstruktive Variationen realisierbar. Hier ausdrücklich erwähnt seien noch:
- Im Ventilantrieb können verschiedene andere Aktoren als der thermische Antrieb eingesetzt werden. Beispielsweise ist die Verwendung eines mechanischen Antriebs, eines chemischen Aktors oder einer Gedächtnislegierung möglich.
- Der Ventilantrieb kann so ausgelegt sein, dass er ein Ventil in unaktiviertem Zustand entweder wie oben beschrieben schliesst (NC) oder alternativ dazu in unaktiviertem Zustand offen belässt (NO). Bei der NO-Ausgestaltung wirkt das Druckelement so auf das Hubelement, dass es von der Ventilspindel wegbewegbar ist. Entsprechend ist der Aktor dabei so ausgelegt, dass er das Hubelement auf die Ventilspindel zubewegen kann. Auch kann der Ventilantrieb Mittel zur Umkehr dessen in unaktiviertem Zustand (NO-NC) aufweisen.
- Das Hubelement kann durch reine Auflage oder durch Formschluss in Verbindung mit dem Kolben des thermischen Antriebs stehen. Das gleiche gilt für die Verbindung der Betätigungsspindel mit dem Hubelement.
- Das Gehäuse des Ventilantriebs kann alternativ zur Öffnung oder auch zusätzlich zur Öffnung ein Fenster aufweisen, durch welches die Stellung des Hubelements von ausserhalb des Gehäuses sichtbar ist. Ein solches Gehäuse mit einem Fenster kann beispielsweise mittels Zweikomponentenspritzverfahren aus zwei unterschiedlichen Kunststoffen gespritzt sein, wobei insbesondere einer der beiden Kunststoffe transparent sein kann und der andere der beiden Kunststoffe untransparent.
- Die Sicherung des Hubelements in der vorgespannten Position kann auf andere Weise als mittels Kuppen ausgeführt sein.

## Patentansprüche

1. Ventilantrieb zum Betätigen eines Ventils (9; 99) mit einer entlang seiner Längsachse bewegbaren Betätigungsspindel (91; 919), der ein mit der Betätigungsspindel (91; 919) wirkungsmässig verbindbares Hubelement (3; 30; 39), einen Aktor (6; 60; 69), mittels dem das Hubelement (3; 30; 39) in eine Hubrichtung bewegbar ist, ein mit einer Kraft entgegen der Hubrichtung auf das Hubelement (3; 30; 39) wirkendes Druckelement (7; 70; 79), Vorspannmittel (2, 311; 20, 3120; 3329, 49) zum Vorspannen des Hubelements (3; 30; 39) entgegen der Kraft des Druckelements (7; 70; 79) in eine Vorspannposition, eine Fixiereinrichtung (22; 2120; 449, 459), mit der das Hubelement (3; 30; 39) in der Vorspannposition fixierbar ist, und Befestigungsmittel (5, 42; 59, 429), bei deren Betätigung der Ventilantrieb in einer befestigten Position betriebsfest am Ventil (9; 99) anordenbar ist, umfasst, **dadurch gekennzeichnet, dass** der Ventilantrieb Auslösemittel (2, 4; 20; 49) umfasst, mit denen simultan die Fixiereinrichtung (22; 2120; 449, 459) lösbar ist und die Befestigungsmittel (5, 42; 59, 429) betätigbar sind, so dass simultan der Ventilantrieb in die befestigte Position stellbar ist und das Hubelement (3; 30; 39) aus der Vorspannposition lösbar ist.

2. Ventilantrieb nach Anspruch 1, bei dem die Vorspannmittel (2, 311; 20, 3120; 3329, 49), die Fixiereinrichtung (22; 2120; 449, 459) und die Auslösemittel (2, 4; 20; 49) so ausgestaltet sind, dass mit den Auslösemitteln (2, 4; 20; 49) simultan über eine Betätigung der Befestigungsmittel (5, 42; 59, 429) der Ventilantrieb aus der befestigten Position lösbar ist, das Hubelement (3; 30; 39) über die Vorspannmittel (2, 311; 20, 3120; 3329, 49) in die Vorspannposition stellbar ist und das Hubelement (3; 30; 39) über die Fixiereinrichtung (22; 2120; 449, 459) in der Vorspannposition fixierbar ist.

3. Ventilantrieb nach einem der Ansprüche 1 oder 2, bei dem das Hubelement (3; 30; 39) ein mit der Betätigungsspindel (91; 919) wirkungsmässig verbindbares Ausgleichsteil (33; 320, 330; 339) und ein mit dem Aktor (6; 60; 69) wirkungsmässig verbindbares Hubteil (31, 32; 310; 319, 329) umfasst, wobei das Ausgleichsteil (33; 320, 330; 339) und das Hubteil (31, 32; 310, 319, 329) über Verriegetungsmittel (321, 331, 4; 3110, 3210, 210; 3219, 3319, 49) an in Hubrichtung verschiedenen Positionen zueinander miteinander verriegelbar und voneinander entriegelbar sind und wobei mit den Auslösemittel (2, 4; 20; 49) simultan die Befestigungsmittel (5, 42; 59, 429) betätigbar sind, die Fixiereinrichtung (22; 2120; 449, 459) lösbar ist, und das Ausgleichsteil (33; 320, 330; 339) mit dem Hubteil (31, 32; 310; 319, 329) verriegelbar ist, so dass simultan der Ventilantrieb in die befestigte Position stellbar ist, das Hubelement (3; 30; 39) aus der Vorspannposition lösbar ist und das Hubteil (31, 32; 310; 319, 329) mit dem Ausgleichsteil (33; 320, 330; 339) in einer einem Schliessmass des Ventils (9; 99) angepassten Position zueinander verriegelbar sind.

4. Ventilantrieb nach Anspruch 3, bei dem die Vorspannmittel (2, 311; 20, 3120; 3329, 49), die Fixiereinrichtung (22; 2120; 449, 459) und die Auslösemittel (2, 4; 20; 49) so ausgestaltet sind, dass mit den Auslösemitteln (2, 4; 20; 49) simultan über eine Betätigung der Befestigungsmittel (5, 42; 59, 429) der Ventilantrieb aus der befestigten Position lösbar ist, das Ausgleichsteil (33; 320, 330; 339) vom Hubteil (31, 32; 310; 319, 329) entriegelbar ist, das Hubelement (3; 30; 39) über die Vorspannmittel (2, 311; 20, 3120; 3329, 49) in die Vorspannposition stellbar ist und das Hubelement (3; 30; 39) über die Fixiereinrichtung (22; 2120; 449, 459) in der Vorspannposition fixierbar ist.

5. Ventilantrieb nach einem der vorangehenden Ansprüche, bei dem das Hubelement (3; 30; 39) zum Vorspannen um eine Vorspannstrecke, die grösser ist als ein maximaler Arbeitshub des Aktors (6; 60; 69), entgegen der Kraft des Druckelements (7; 70; 79) in die Vorspannposition vorspannbar ist.

6. Ventilantrieb nach einem der vorangehenden Ansprüche, der ein um das Hubelement (3; 30; 39) drehbares Drehelement (2; 20; 49) umfasst, wobei die Vorspannmittel (2, 311; 20, 3120; 3329, 49) mindestens ein radial vom Hubelement (3; 30; 39) abstehendes, fest am Hubelement (3; 30; 39) angeordnetes Drehglied (332; 3120; 3329) und mindestens eine wirkungsmässig mit dem mindestens einen Drehglied (332; 3120; 3329) verbindbare, am Drehelement (2; 20; 49) fest angeordnete Rampe (21; 2110; 429) aufweisen, so dass das Hubelement (3; 30; 39) über ein Verschieben des Drehglieds (332;3120; 3329) entlang der Rampe (21; 2110; 429) mittels Drehen des Drehelements (2; 20; 49) vorspannbar ist.

7. Ventilantrieb nach Anspruch 6, bei dem die Fixiereinrichtung (22; 2120; 449, 459) eine Sicherung (459) aufweist, die so ausgestaltet ist, dass das mindestens eine Drehglied (332; 3120; 3329) mittels der Sicherung (459) sicherbar ist, wenn das Hubelement (3; 30; 39) vorgespannt ist.

8. Ventilantrieb nach einem der Ansprüche 6 oder 7, bei dem die Befestigungsmittel (5, 42; 59, 429) eine mit dem Ventil (9; 99) fest verbindbare, mindestens ein erstes Formschlusselement (52; 529) aufweisende Mutter (5; 59), um die ein unterer Teil des Drehelements (2; 20; 49) drehbar ist, und mindestens ein am unteren Teils des Drehelements (2; 20; 49) angeordnetes, komplementär zum ersten Formschlusselement (52; 529) ausgestaltetes, zweites Formschlusselement (42; 429) umfassen, wobei die Mutter (5; 59) und das Drehelement (2; 20; 49) so ausgestaltet sind, dass der Ventilantrieb mittels Drehen des Drehelements (2; 20; 49) über ein Verbinden des mindesten einen ersten Formschlusselements (52; 529) mit dem mindesten einen zweiten Formschlusselement (42; 429) in Hubrichtung ortsfest an der Mutter (5; 59) befestigbar ist, wenn das Drehelement (2; 20; 49) auf die Mutter (5; 59) aufgesetzt ist.

9. Ventilantrieb nach einem der Ansprüche 3 bis 8, bei dem das Hubteil (31, 32; 310; 319, 329) drehfest mit der Mutter (5; 59) verbindbar ist, wenn das Drehelement (2; 20; 49) auf die Mutter (5; 59) aufgesetzt ist, und bei dem das Ausgleichsteil (33; 320, 330; 339) und das Hubteil (31, 32; 310; 319, 329) mittels Verdrehen zueinander miteinander verriegelbar und voneinander entriegelbar sind.

10. Ventilantrieb nach Anspruch 9, bei dem das mindestens eine Drehglied (332; 3120; 3329) fest am Ausgleichsteil (33; 320, 330; 339) angeordnet ist, das Drehelement (2; 20; 49) einen Anschlag (479) aufweist und mindestens eine Drehsicherung (3249) angeordnet ist, wobei das mindestens eine Drehglied (332; 3120; 3329) von der Drehsicherung (3249) gehalten ist, wenn sich das Hubelement (3; 30; 39) in der vorgespannten Position befindet, und wobei das Ausgleichsteil (33; 320, 330; 339) mittels des Anschlags (479) des Drehelements (2; 20; 49) über das Drehglied (332; 3120; 3329) zum Hubteil (31, 32; 310; 319, 329) verdreht ist, wenn das Drehelement (2; 20; 49) gedreht ist, so dass das Ausgleichsteil (33; 320, 330; 339) mit dem Hubteil (31, 32; 310; 319, 329) verriegelt ist.

## Claims

1. Valve drive for operating a valve (9; 99) with an operating spindle (91; 919) movable along its longitudinal axis, comprising a stroke element (3; 30; 39) operatively connectable to the operating spindle (91; 919), an actuator (6; 60; 69), by means of which the stroke element (3; 30; 39) is movable into a stroke direction, a thrust element (7; 70; 79) exerting a force on the stroke element (3; 30; 39) in a direction opposite the stroke direction, preload means (2, 311; 20, 3120; 3329, 49) for preloading the stroke element (3; 30; 39) against the force of the thrust element (7; 70; 79) into a preload position, a fixing means (22; 2120; 449, 459), by which the stroke element (3; 30; 39) is fixable in the preload position, and fastening means (5, 42; 59, 429), upon actuation of which the valve drive can be mounted to the valve (9; 99) in an action-proof fastened position, **characterized in that** the valve drive comprises trigger means (2, 4; 20; 49), with which simultaneously the fixing means (22; 2120; 449, 459) can be released and the fastening means (5, 42; 59, 429) can be actuated, such that simultaneously the valve drive can be moved into the fastened position and the stroke element (3; 30; 39) can be released from the preload position.

2. Valve drive according to claim 1, wherein the preload means (2, 311; 20, 3120; 3329, 49), the fixing means (22; 2120; 449, 459) and the trigger means (2, 4; 20; 49) are provided such that with the trigger means (2, 4; 20; 49) by actuating the fastening means (5, 42; 59, 429) simultaneously the valve drive can be released from the fastened position, the stroke element (3; 30; 39) can be brought into the preload position through the preload means (2, 311; 20, 3120; 3329, 49) and the stroke element (3; 30; 39) can be fixed in the fastened position through the fixing means (22; 2120; 449, 459).

3. Valve drive according to any one of claims 1 or 2, wherein the stroke element (3; 30; 39) comprises a compensation part (33; 320, 330; 339) operatively connectable to the operating spindle (91; 919) and a stroke part (31, 32; 310; 319, 329) operatively connectable to the actuator (6; 60; 69), wherein the compensation part (33; 320, 330; 339) and the stroke part (31, 32; 310; 319, 329) are lockable with and unlockable from each other by locking means (321, 331, 4; 3110, 3210, 210; 3219, 3319, 49) in different positions relative to each other along the stroke direction, and wherein with the trigger means (2, 4; 20; 49) simultaneously the fastening means (5, 42; 59, 429) can be actuated, the fixing means (22; 2120; 449, 459) can be released, and the compensation part (33; 320, 330; 339) can be locked with the stroke part (31, 32; 310; 319, 329), so that simultaneously the valve drive can be brought into the fastened position, the stroke element (3; 30; 39) can be released from the preload position and the stroke part (31, 32; 310; 319, 329) can be locked with the compensation part (33; 320, 330; 339) in a position relative to each other which is adapted to a closing clearance of the valve (9; 99).

4. Valve drive according to claim 3, wherein the preload means (2, 311; 20, 3120; 3329, 49), the fixing means (22; 2120; 449, 459) and the trigger means (2, 4; 20; 49) are provided such that with the trigger means (2, 4; 20; 49) simultaneously by actuating the fastening means (5, 42; 59, 429) the valve drive can be released from the fastened position, the compensation part (33; 320, 330; 339) can be unlocked from the stroke part (31, 32; 310; 319, 329), the stroke element (3; 30; 39) can be brought into the preload position through the preload means (2, 311; 20, 3120; 3329, 49) and the stroke element (3; 30; 39) can be fixed in the fastened position through the fixing means (22; 2120; 449, 459).

5. Valve drive according to any one of the preceding claims, wherein the stroke element (3; 30; 39) for preloading is preloadable into the preload position against the force of the thrust element (7; 70; 79) over a preload range which is longer than a maximum working stroke of the actuator (6; 60; 69).

6. Valve drive according to any one of the preceding claims, which comprises a rotatable element (2; 20; 49) which is rotatable about the stroke element (3; 30; 39), wherein the preload means (2, 311; 20, 3120; 3329, 49) comprise at least one turning member (332; 3120; 3329), which is affixed to and radially protrudes from the stroke element (3; 30; 39), and at least one ramp (21; 2110; 429) affixed to the rotatable element (2; 20; 49) and operatively connectable to the at least one turning member (332; 3120; 3329), such that the stroke element (3; 30; 39) can be preloaded by moving the turning member (332;3120; 3329) along the ramp (21; 2110; 429) by rotating the rotatable element (2; 20; 49).

7. Valve drive according to claim 6, wherein the fixing means (22; 2120; 449, 459) comprises a securing device (459), which is provided such that the at least one turning member (332; 3120; 3329) can be secured by means of the securing device (459), when the stroke element (3; 30; 39) is preloaded.

8. Valve drive according to any one of claims 6 or 7, wherein the fastening means (5, 42; 59, 429) comprises a nut (5; 59) having a first form closure element (52; 529) and being permanently connectable to the valve (9; 99), around which nut a lower part of the rotatable element (2; 20; 49) is rotatable, and at least one second form closure element (42; 429), which is complementary to the first form closure element (52; 529) and which is arranged at the lower part of the rotatable element (2; 20; 49), wherein the nut (5; 59) and the rotatable element (2; 20; 49) are formed such that the valve drive is stationary affixable to the nut (5; 59) in the stroke direction through connecting the at least one first form closure element (52; 529) with the at least one second form closure element (42; 429) by rotating the rotatable element (2; 20; 49), when the rotatable element (2; 20; 49) is put onto the nut (5; 59).

9. Valve drive according to any one of claims 3 to 8, wherein the stroke part (31, 32; 310; 319, 329) is torque proof attachable to the nut (5; 59), when the rotatable element (2; 20; 49) is put onto the nut (5; 59), and wherein the compensation part (33; 320, 330; 339) and the stroke part (31, 32; 310; 319, 329) are lockable with and unlockable from each other by twisting against each other.

10. Valve drive according to claim 9, wherein the at least one turning member (332; 3120; 3329) is affixed to the compensation part (33; 320, 330; 339), the rotatable element (2; 20; 49) comprises a stop (479) and at least one twist lock (3249) is provided, wherein the at least one turning member (332; 3120; 3329) is held by the twist lock (3249), when the stroke element (3; 30; 39) is in the preloaded position, and wherein the compensation part (33; 320, 330; 339) is twisted relative to the stroke part (31, 32; 310; 319, 329) through the turning member (332; 3120; 3329) by means of the stop (479) of the rotatable element (2; 20; 49), when the rotatable element (2; 20; 49) is rotated, such that the compensation part (33; 320, 330; 339) is locked with the stroke part (31, 32; 310; 319, 329).

## Revendications

1. Entraînement de soupape pour commander une soupape (9; 99) comprenant une broche d'actionnement (91; 919) déplaçable le long de son axe longitudinal, qui comprend un élément de levage (3; 30; 39) opérationnellement raccordable à la broche d'actionnement (91; 919), un dispositif d'actionnement (6; 60; 69) au moyen duquel l'élément de levage (3; 30; 39) est déplaçable dans une direction de levage, un élément de pression (7; 70; 79) agissant avec une certaine force sur l'élément de levage (3; 30; 39) à l'encontre de la direction de levage, des moyens de précontrainte (2, 311; 20, 3120; 3329, 49) pour précontraindre l'élément de levage (3; 30; 39) à l'encontre de la force de l'élément de pression (7; 70; 79) dans une position de précontrainte, un dispositif de fixation (22; 2120; 449, 459) au moyen duquel l'élément de levage (3; 30; 39) peut être fixé dans la position de précontrainte, et des moyens de fixation (5, 42; 59, 429), qui peuvent être commandés pour agencer l'entraînement de soupape en position fixe de fonctionnement sur la soupape (9; 99), **caractérisé en ce que** le dispositif d'actionnement de soupape comprend des moyens de déconnexion (2, 4; 20; 49) qui permettent simultanément de dégager le dispositif de fixation (22; 2120; 449, 459) et de commander les moyens de fixation (5, 42; 59, 429) de manière à pouvoir simultanément régler l'entraînement de soupape en position fixe et dégager l'élément de levage (3; 30; 39) de la position de précontrainte.

2. Entraînement de soupape selon la revendication 1, dans lequel les moyens de précontrainte (2, 311; 20, 3120; 3329, 49), le dispositif de fixation (22; 2120; 449, 459) et les moyens de déconnexion (2, 4; 20; 49) sont configurés de sorte que les moyens de déconnexion (2, 4; 20; 49) puissent simultanément libérer l'entraînement de soupape de la position fixée par commande des moyens de fixation (5, 42; 59, 429), régler l'élément de levage (3; 30; 39) dans la position de précontrainte par les moyens de précontrainte (2, 311; 20, 3120; 3329, 49) et fixer l'élément de levage (3; 30; 39) par le dispositif de fixation (22; 2120; 449, 459) dans la position de précontrainte.

3. Entraînement de soupape selon l'une quelconque des revendications 1 ou 2, dans lequel l'élément de levage (3; 30; 39) comprend une pièce de compensation (33; 320, 330; 339) opérationnellement raccordable à la broche d'actionnement (91; 919) et une pièce de levage (31, 32; 310; 319, 329) opérationnellement raccordable au dispositif d'actionnement (6; 60; 69), dans lequel la pièce de compensation (33; 320, 330; 339) et la pièce de levage (31, 32; 310; 319, 329) sont verrouillables l'une avec l'autre et déverrouillables l'une de l'autre par des moyens de verrouillage (321, 331, 4; 3110, 3210, 210; 3219, 3319, 49) dans différentes positions l'une par rapport à l'autre dans la direction de levage et dans lequel les moyens de déconnexion (2, 4; 20; 49) permettent simultanément de commander les moyens de fixation (5, 42; 59, 429), de dégager le dispositif de fixation (22; 2120; 449, 459) et de verrouiller la pièce de compensation (33; 320, 330; 339) avec la pièce de levage (31, 32; 310; 319, 329) de sorte que l'on puisse simultanément régler l'entraînement de soupape dans la position fixée, dégager l'élément de levage (3; 30; 39) de la position de précontrainte et verrouiller la pièce de levage (31, 32; 310; 319, 329) avec la pièce de compensation (33; 320, 330; 339) dans une position ajustée à un degré de fermeture de la soupape (9; 99).

4. Entraînement de soupape selon la revendication 3, dans lequel les moyens de précontrainte (2, 311; 20, 3120; 3329, 49), le dispositif de fixation (22; 2120; 449, 459) et les moyens de déconnexion (2, 4; 20; 49) sont configurés de sorte que les moyens de déconnexion (2, 4; 20; 49) puissent simultanément libérer l'entraînement de soupape de la position fixée par commande des moyens de fixation (5, 42; 59, 429), déverrouiller la pièce de compensation (33, 320, 330, 339) de la pièce de levage (31, 32; 310; 319, 329), régler l'élément de levage (3; 30; 39) dans la position de précontrainte par les moyens de précontrainte (2, 311; 20, 3120; 3329, 49) et fixer l'élément de levage (3 ; 30 ; 39) par le dispositif de fixation (22; 2120; 449, 459) dans la position de précontrainte.

5. Entraînement de soupape selon l'une quelconque des revendications précédentes, dans lequel l'élément de levage (3; 30; 39) pour la précontrainte peut être précontraint à l'encontre de la force de l'élément de pression (7; 70; 79) dans la position de précontrainte d'une distance de précontrainte qui est plus grande qu'une course de travail maximale du dispositif d'actionnement (6; 60; 69).

6. Entraînement de soupape selon l'une quelconque des revendications précédentes, qui comprend un élément (2; 20; 49) rotatif autour de l'élément de levage (3; 30; 39), dans lequel les moyens de précontrainte (2, 311; 20, 3120; 3329, 49) présentent au moins un organe rotatif (332; 3120; 3329) saillant radialement de l'élément de levage (3; 30; 39) et agencé fixe sur l'élément de levage (3; 30; 39) et au moins une rampe (21; 2110; 429) agencée fixe sur l'élément rotatif (2; 20; 49) et opérationnellement raccordable au au moins un organe rotatif (332; 3120; 3329) de sorte que l'élément de levage (3; 30; 39) puisse être précontraint par un déplacement de l'organe rotatif (332; 3120; 3329) le long de la rampe (21; 2110; 429) au moyen d'une rotation de l'élément rotatif (2; 20; 49).

7. Entraînement de soupape selon la revendication 6, dans lequel le dispositif de fixation (22; 2120; 449, 459) présente un dispositif de blocage (459) qui est configuré de manière que le au moins un organe rotatif (332; 3120; 3329) puisse être bloqué au moyen du dispositif de blocage (459) lorsque l'élément de levage (3; 30; 39) est précontraint.

8. Entraînement de soupape selon l'une quelconque des revendications 6 ou 7, dans lequel les moyens de fixation (5, 42; 59, 429) comprennent un écrou (5; 59) présentant au moins un premier élément à complémentarité de forme (52; 529), raccordable de manière fixe à la soupape (9; 99), écrou autour duquel on peut faire tourner une partie inférieure de l'élément rotatif (2; 20; 49), et au moins un deuxième élément à complémentarité de forme (42; 429) agencé sur la partie inférieure de l'élément rotatif (2; 20; 49), configuré de manière complémentaire au premier élément à complémentarité de forme (52; 529), dans lequel l'écrou (5; 59) et l'élément rotatif (2; 20; 49) sont configurés de sorte que l'entraînement de soupape puisse être fixé de manière fixe sur l'écrou (5; 59) dans la direction de levage par un raccordement du au moins un premier élément à complémentarité de forme (52; 529) au au moins un deuxième élément à complémentarité de forme (42; 429) par une rotation de l'élément rotatif (2; 20; 49) lorsque l'élément rotatif (2, 20; 49) est appliqué sur l'écrou (5; 59).

9. Entraînement de soupape selon l'une quelconque des revendications 3 à 8, dans lequel la pièce de levage (31, 32; 310; 319, 329) est raccordable de manière solidaire en rotation à l'écrou (5; 59) lorsque l'élément rotatif (2; 20; 49) est appliqué sur l'écrou (5; 59) et dans lequel la pièce de compensation (33; 320, 330; 339) et la pièce de levage (31, 32; 310; 319, 329) sont verrouillables l'une avec l'autre et déverrouillables l'une de l'autre par rotation de l'une par rapport à l'autre.

10. Entraînement de soupape selon la revendication 9, dans lequel le au moins un organe rotatif (332 ; 3120 ; 3329) est agencé de manière fixe sur la pièce de compensation (33; 320, 330; 339), l'élément rotatif (2; 20; 49) présente une butée (479) et il est aménagé au moins un dispositif de blocage de rotation (3249), dans lequel le au moins un organe rotatif (332; 3120; 3329) est maintenu par le dispositif de blocage de rotation (3249) lorsque l'élément de levage (3; 30; 39) se trouve dans la position précontrainte et dans lequel la pièce de compensation (33; 320, 330; 339) pivote par rapport à la pièce de levage (31, 32; 310; 319, 329) à l'aide de la butée (479) de l'élément rotatif (2; 20; 49) via l'organe rotatif (332; 3120; 3329) lorsque l'élément rotatif (2; 20; 49) est soumis à une rotation, de manière à verrouiller la pièce de compensation (33, 320, 330; 339) avec la pièce de levage (31, 32; 310; 319, 329).
